# EUROPEAN PATENT APPLICATION

(11) **EP 1 486 851 A1**
(43) Date of publication of application: **15.12.2004**
(21) Application number: 03780979.5
(22) Date of filing: 22.12.2003
(51) Int. Cl.: G06F 1/00

(54) **AUTHENTICATION SYSTEM, AUTHENTICATION SERVER, AUTHENTICATION METHOD, AUTHENTICATION PROGRAM, TERMINAL, AUTHENTICATION REQUEST METHOD, AUTHENTICATION REQUEST PROGRAM, AND STORAGE MEDIUM**

(30) Priority: 06.01.2003 JP 2003000078; 28.11.2003 JP 2003400367
(71) Applicant: Sony Corporation, Tokyo 141-0001 (JP)
(72) Inventor: OGINO, Shinichi, Sony Corporation, Tokyo 141-0001 (JP); HASEJIMA, Shinji, Sony Corporation, Tokyo 141-0001 (JP); OHASHI, Haruhiko, Sony Corporation, Tokyo 141-0001 (JP); YAMAMOTO, Koichi, Sony Corporation, Tokyo 141-0001 (JP); MURAYAMA, Reiko, Sony Corporation, Tokyo 141-0001 (JP); FUSE, Atsushi, Sony Corporation, Tokyo 141-0001 (JP); ARAKAWA, Shinji, Sony Corporation, Tokyo 141-0001 (JP); KONDO, Hidekazu, Sony Corporation, Tokyo 141-0001 (JP); OKADA, Hiroshi, Sony Corporation, Tokyo 141-0001 (JP); MISAWA, Seiichi, Sony Corporation, Tokyo 141-0001 (JP); KURASAKI, Toshiya, Sony Corporation, Tokyo 141-0001 (JP); NISHIYAMA, Kazuhiro, Sony Corporation, Tokyo 141-0001 (JP)
(74) Representative: Smith, Samuel Leonard
(86) International application number: PCT/JP2003/016454
(87) International publication number: WO 2004/061627

(57) **Abstract**

Disclosed herein is an authentication system offering high degrees of security and convenience by use of two storage media. An automatic log-in system (100) requests a server (110) to perform a user authentication process using card-specific information (101) retrieved from an IC card (10) and password information (102) from a portable memory (11). The server (110) authenticates the user by acquiring a user ID and a password using the card-specific information (101) and password information (102). The card-specific information (101) and password information (102) constitute authentication request information, and the user ID and password make up authentication information. Following successful authentication of the user, the server (110) allows the user to log in; in case of unsuccessful authentication, the server (110) denies log-in.

## Description

### Technical Field

The present invention relates to an authentication system and related techniques. More particularly, the invention relates to an authentication system and related improvements for enabling a terminal and an authentication server each keeping a user's electronic tally independently to allow the user to acquire authentication information when the user's tallies from the two devices match and to request authentication using authentication request information kept in two storage media in the user' s possession.

### Background Art

With the Internet rapidly coming into general use in recent years, people can readily receive services over the Internet using terminals set up in the household or workplace or through the use of portable terminals.

Diverse services are offered over the Internet, including Internet banking, securities transactions, online shopping, and information searches.

Some of so-called service sites offering these services authenticate their users by use of authentication information such as passwords and user ID' s.

In order to log in to any one of these sites, a user first transmits authentication information from a terminal to a server. At the server, the transmitted information is tallied with information stored beforehand for authentication purposes.

More specifically, when logging in to the site, the user typically enters a password and a user ID through a log-in screen for transmission to the server.

Conventional authenticating methods utilizing passwords have been known to be vulnerable to security breaches. That is, a third party who stole a password could easily impersonate a legitimate user. In order to circumvent such weakness, a method has been proposed which involves the use of electronic tallies.

An electronic tally is one of a plurality of pieces constituting authentication information. In other words, suitable authentication information is divided by predetermined logic into multiple pieces called tallies. The original authentication information is reconstituted only if all divided tallies are gathered and matched.

Typically, authentication information about a user is divided into two tallies. One of the tallies is managed by the user and the other by the server. At the time of authentication, the user transmits his or her electronic tally to the server side. In turn, an automatic log-in server reconstitutes the authentication information using two electronic tallies.

Even if the user' s electronic tally leaks to a third party, that third party is unable to restore the original authentication information using the illicitly acquired tally alone. This is supposed to ensure an enhanced level of security.

Techniques have been proposed to improve security using the electronic tally scheme.

One such technique is disclosed in Japanese Patent Laid-open No. 2001-331450. The disclosed technique involves getting a server to generate two tallies out of authentication information and to hand one of the tallies over to a user and the other to a service site offering services. The service site receives the user's tally and matches it against the previously stored counterpart tally so as to acquire the user's authentication information. The authentication information thus obtained is used to authenticate the user.

However, if one of the tallies transferred to the user is stolen by a third party, that third party can simply use the tally illegally to access the server for authentication.

It is therefore an object of the present invention to provide an authentication system that ensures high levels of security even if a user's electronic tally leaks to a third party, as well as an authentication system that authenticates the user using information retrieved from two storage media.

### Disclosure of Invention

In carrying out the invention and according to one aspect thereof, there is provided an authentication system including a terminal and an authentication server, the terminal acquiring first identification information from a first storage medium and tally information from a second storage medium, the first identification information identifying the first storage medium, the authentication server receiving the first identification information and the tally information from the terminal in order to perform an authentication process; wherein, having acquired the first identification information from the first storage medium and the tally information from the second storage medium, the terminal transmits the acquired first identification information and tally information to the authentication server; and wherein, having received the first identification information and the tally information from the terminal, the authentication server performs the authentication process using the received first identification information and tally information (first constitution of the invention).

According to another aspect of the invention, there is provided an authentication server connected to a terminal which acquires first identification information from a first storage medium and tally information from a second storage medium, the first identification information identifying the first storage medium, the authentication server receiving the first identification information and the tally information from the terminal in order to perform an authentication process, the authentication server including: medium information receiving means for receiving the first identification information and the tally information from the terminal; and authenticating means for carrying out the authentication process using the first identification information and the tally information received (second constitution of the invention).

Preferably in the second constitution of the invention, the second storage medium may store second identification information for identifying the second storage medium; the authentication server may further include second identification information receiving means for receiving the second identification information acquired by the terminal from the second storage medium; and the authenticating means may perform the authentication process if a combination of the second identification information and the tally information received matches a combination of previously stored second identification information and tally information (third constitution of the invention).

Preferably in the second constitution of the invention, the authenticating means may perform the authentication process if the first identification information received matches previously stored first identification information (fourth constitution of the invention).

Preferably in the second constitution of the invention, the authenticating means may perform the authentication process if a combination of the first identification information and the tally information received matches a combination of previously stored first identification information and tally information (fifth constitution of the invention).

Preferably in the second constitution of the invention, the authentication server may further include searching means which searches for first authentication information based on the first identification information received and for second authentication information based on the tally information received; wherein the authenticating means may perform the authentication process using the first authentication information and the second authentication information retrieved by the searching means (sixth constitution of the invention).

Preferably in the sixth constitution of the invention, the authentication server may further include: tally information transmitting means for generating tally information and transmitting the generated tally information to the terminal; and storing means for storing the generated tally information into a storage unit in association with the second identification information; wherein the searching means may search for the stored tally information (seventh constitution of the invention).

Preferably in the seventh constitution of the invention, the tally information transmitting means may generate new tally information after the authenticating means has used the tally information received from the terminal in carrying out the authentication process (eighth constitution of the invention).

Preferably in the second constitution of the invention, at least one of the first and the second storage media may be a portable memory constituted by either an IC card or a semiconductor memory (ninth constitution of the invention).

Preferably in the second constitution of the invention, the authentication server may further include an authentication information storing means for receiving new first identification information and tally information from the terminal so as to store authentication information based on the first identification information and the tally information received; wherein the authenticating means may perform the authentication process using the stored authentication information (tenth constitution of the invention.

According to a further aspect of the invention, there is provided an authenticating method for use with an authentication server connected to a terminal which acquires first identification information from a first storage medium and tally information from a second storage medium, the first identification information identifying the first storage medium, the authenticating method allowing the authentication server to receive the first identification information and the tally information from the terminal in order to perform an authentication process, the authentication server including medium information receiving means and authenticating means, the authenticating method including the steps of: (a) causing the medium information receiving means to receive the first identification information and the tally information from the terminal; and (b) causing the authenticating means to carry out the authentication process using the first identification information and the tally information received (eleventh constitution of the invention).

Preferably in the eleventh constitution of the invention, the second storage medium may store second identification information for identifying the second storage medium; and the authentication server may include second identification information receiving means; the authenticating method further including the steps of: (c) causing the second identification information receiving means to receive from the terminal the second identification information acquired by the terminal from the second storage medium; and (d) executing step (b) to perform the authentication process if a combination of the second identification information and the tally information received matches a combination of previously stored second identification information and tally information (twelfth constitution of the invention).

Preferably in the eleventh constitution of the invention, the authenticating method may further include the step of executing step (b) to perform the authentication process if the first identification information received matches previously stored first identification information (thirteen constitution of the invention).

Preferably in the eleventh constitution of the invention, the authenticating method may further include the step of executing step (b) to perform the authentication process if a combination of the first identification information and the tally information received matches a combination of previously stored first identification information and tally information (fourteenth constitution of the invention).

Preferably in the eleventh constitution of the invention, the authentication server may further include searching means, and the authenticating method may further include the steps of: (e) causing the searching means to search for first authentication information using the first identification information received and to search for second authentication information using the tally information received; and (f) executing step (b) to perform the authentication process using the first and the second authentication information retrieved in step (e)(fifteenth constitution of the invention).

Preferably in the fifteenth constitution of the invention, the authentication server may further include tally information transmitting means and storing means, and the authenticating method may further include the steps of: (g) causing the tally information transmitting means to generate tally information and transmit the generated tally information to the terminal; (h) causing the storing means to store the generated tally information into a storage unit in association with the second identification information; and (i) executing step (e) to search for the stored tally information (sixteenth constitution of the invention).

Preferably in the sixteenth constitution of the invention, the authenticating method may further include the step of causing the tally information transmitting means to generate new tally information after the authenticating means has used the tally information received from the terminal in carrying out the authentication process (seventeenth constitution of the invention).

Preferably in the eleventh constitution of the invention, at least one of the first and the second storage media may be a portable memory constituted by either an IC card or a semiconductor memory (eighteenth constitution of the invention).

Preferably in the eleventh constitution of the invention, the authentication server may further include authentication information storing means, and the authenticating method may further include the steps of: (j) causing the authentication information storing means to receive new first identification information and tally information from the terminal so as to store authentication information based on the first identification information and the tally information received; and (k) executing step (b) to perform the authentication process using the stored authentication information (nineteenth constitution of the invention).

According to an even further aspect of the invention, there is provided an authenticating program for use with a computer connected to a terminal which acquires first identification information from a first storage medium and tally information from a second storage medium, the first identification information identifying the first storage medium, the authenticating program allowing the computer to receive the first identification information and the tally information from the terminal in order to perform an authentication process, the authenticating program causing the computer to implement functions including: a medium information receiving function of receiving the first identification information and the tally information from the terminal; and an authenticating function of carrying out the authentication process using the first identification information and the tally information received (twentieth constitution of the invention).

Preferably in the twentieth constitution of the invention, the second storage medium may store second identification information for identifying the second storage medium, and the authenticating program may further cause the computer to implement a second identification information receiving function of receiving from the terminal the second identification information acquired by the terminal from the second storage medium; wherein the authenticating function may be executed so as to perform the authentication process if a combination of the second identification information and the tally information received matches a combination of previously stored second identification information and tally information (twenty-first constitution of the invention).

Preferably in the twentieth constitution of the invention, the authenticating function may be executed so as to perform the authentication process if the first identification information received matches previously stored first identification information (twenty-second constitution of the invention).

Preferably in the twentieth constitution of the invention, the authenticating function may be executed so as to perform the authentication process if a combination of the first identification information and the tally information received matches a combination of previously stored first identification information and tally information (twenty-third constitution of the invention).

Preferably in the twentieth constitution of the invention, the authenticating program may further cause the computer to implement a searching function of searching for first authentication information using the first identification information received and of searching for second authentication information using the tally information received; wherein the authenticating function may be executed so as to perform the authentication process using the first and the second authentication information retrieved by the searching function (twenty-fourth constitution of the invention).

Preferably in the twenty-fourth constitution of the invention, the authenticating program may further cause the computer to implement: a tally information transmitting function of generating tally information and transmitting the generated tally information to the terminal; and a storing function of storing the generated tally information into a storage unit in association with the second identification information; wherein the searching function may be executed so as to search for the stored tally information (twenty-fifth constitution of the invention).

Preferably in the twenty-fifth constitution of the invention, the tally information transmitting function may be executed so as to generate new tally information after the authenticating function has used the tally information received from the terminal in carrying out the authentication process (twenty-sixth constitution of the invention).

Preferably in the twentieth constitution of the invention, at least one of the first and the second storage media may be a portable memory constituted by either an IC card or a semiconductor memory (twenty-seventh constitution of the invention).

Preferably in the twentieth constitution of the invention, the authenticating program may further cause the computer to implement an authentication information storing function of receiving new first identification information and tally information from the terminal so as to store authentication information based on the first identification information and the tally information received; wherein the authenticating function may be executed so as to perform the authentication process using the stored authentication information (twenty-eighth constitution of the invention).

According to a still further aspect of the invention, there is provided a storage medium which stores an authenticating program in a manner readable by a computer connected to a terminal which acquires first identification information from a first storage medium and tally information from a second storage medium, the first identification information identifying the first storage medium, the authenticating program allowing the computer to receive the first identification information and the tally information from the terminal in order to perform an authentication process, the authenticating program causing the computer to implement functions including: a medium information receiving function of receiving the first identification information and the tally information from the terminal; and an authenticating function of carrying out the authentication process using the first identification information and the tally information received (twenty-ninth constitution of the invention).

Preferably in the twenty-ninth constitution of the invention, the second storage medium may store second identification information for identifying the second storage medium, and the authenticating program may further cause the computer to implement a second identification information receiving function of receiving from the terminal the second identification information acquired by the terminal from the second storage medium; wherein the authenticating function may be executed so as to perform the authentication process if a combination of the second identification information and the tally information received matches a combination of previously stored second identification information and tally information (thirtieth constitution of the invention).

Preferably in the twenty-ninth constitution of the invention, the authenticating function may be executed so as to perform the authentication process if the first identification information received matches previously stored first identification information (thirty-first constitution of the invention.

Preferably in the twenty-ninth constitution of the invention, the authenticating function may be executed so as to perform the authentication process if a combination of the first identification information and the tally information received matches a combination of previously stored first identification information and tally information (thirty-second constitution of the invention).

Preferably in the twenty-ninth constitution of the invention, the authenticating program may further cause the computer to implement a searching function of searching for first authentication information using the first identification information received and of searching for second authentication information using the tally information received; and the authenticating function may be executed so as to perform the authentication process using the first and the second authentication information retrieved by the searching function (thirty-third constitution of the invention).

Preferably in the thirty-third constitution of the invention, the authenticating program may further cause the computer to implement: a tally information transmitting function of generating tally information and transmitting the generated tally information to the terminal; and a storing function of storing the generated tally information into a storage unit in association with the second identification information; wherein the searching function may be executed so as to search for the stored tally information (thirty-fourth constitution of the invention).

Preferably in the thirty-fourth constitution of the invention, the tally information transmitting function may be executed so as to generate new tally information after the authenticating function has used the tally information received from the terminal in carrying out the authentication process (thirty-fifth constitution of the invention).

Preferably in the twenty-ninth constitution of the invention, at least one of the first and the second storage media may be a portable memory constituted by either an IC card or a semiconductor memory (thirty-sixth constitution of the invention).

Preferably in the twenty-ninth constitution of the invention, the authenticating program may further cause the computer to implement an authentication information storing function of receiving new first identification information and tally information from the terminal so as to store authentication information based on the first identification information and the tally information received; and the authenticating function may be executed so as to perform the authentication process using the stored authentication information (thirty-seventh constitution of the invention).

According to a yet further aspect of the invention, there is provided a terminal for requesting an authentication server of claim 2 to perform an authentication process, the terminal including: medium information acquiring means for acquiring first identification information from a first storage medium and tally information from a second storage medium, the first identification information identifying the first storage medium, and; medium information transmitting means for transmitting the acquired first identification information and tally information to the authentication server (thirty-eighth constitution of the invention).

According to another aspect of the invention, there is provided a terminal for requesting an authentication server of claim 3 to perform an authentication process, the terminal including: medium information acquiring means for acquiring first identification information from a first storage medium and second identification information and tally information from a second storage medium, the first identification information identifying the first storage medium, the second identification information identifying the second storage medium, and; medium information transmitting means for transmitting the acquired first identification information, second identification information, and tally information to the authentication server (thirty-ninth constitution of the invention).

According to a further aspect of the invention, there is provided a terminal for requesting an authentication server of claim 7 to perform an authentication process, the terminal including: medium information acquiring means for acquiring first identification information from a first storage medium and tally information from a second storage medium, the first identification information identifying the first storage medium; medium information transmitting means for transmitting the acquired first identification information and tally information to the authentication server; tally information receiving means for receiving tally information from the authentication server; and replacing means for replacing the tally information stored in the second storage medium with the tally information received by the tally information receiving means (fortieth constitution of the invention.

According to an even further aspect of the invention, there is provided an authentication requesting method for requesting an authentication server of claim 2 to perform an authentication process, the authentication requesting method being for use with a computer including medium information acquiring means and medium information transmitting means, the authentication requesting method including the steps of: causing the medium information acquiring means to acquire first identification information from a first storage medium and tally information from a second storage medium, the first identification information identifying the first storage medium; and causing the medium information transmitting means to transmit the acquired first identification information and tally information to the authentication server (forty-first constitution of the invention).

According to a still further aspect of the invention, there is provided an authentication requesting method for requesting an authentication server of claim 3 to perform an authentication process, the authentication requesting method being for use with a computer including medium information acquiring means and medium information transmitting means, the authentication requesting method including the steps of: causing the medium information acquiring means to acquire first identification information from a first storage medium and second identification information and tally information from a second storage medium, the first identification information identifying the first storage medium, the second identification information identifying the second storage medium; and causing the medium information transmitting means to transmit the acquired first identification information, second identification information and tally information to the authentication server (forty-second constitution of the invention).

According to a yet further aspect of the invention, there is provided an authentication requesting method for requesting an authentication server of claim 7 to perform an authentication process, the authentication requesting method being for use with a computer including medium information acquiring means, medium information transmitting means, tally information receiving means, and replacing means, the authentication requesting method including the steps of: causing the medium information acquiring means to acquire first identification information from a first storage medium and tally information from a second storage medium, the first identification information identifying the first storage medium; causing the medium information transmitting means to transmit the acquired first identification information and tally information to the authentication server; causing the tally information receiving means to receive tally information from the authentication server; and causing the replacing means to replace the tally information stored in the second storage medium with the tally information received by the tally information receiving means (forty-third constitution of the invention).

According to another aspect of the invention, there is provided an authentication requesting program for causing a computer to request an authentication server of claim 2 to perform an authentication process, the authentication requesting program causing the computer to implement functions including: a medium information acquiring function of acquiring first identification information from a first storage medium and tally information from a second storage medium, the first identification information identifying the first storage medium; and a medium information transmitting function of transmitting the acquired first identification information and tally information to the authentication server (forty-fourth constitution of the invention).

According to a further aspect of the invention, there is provided an authentication requesting program for causing a computer to request an authentication server of claim 3 to perform an authentication process, the authentication requesting program causing the computer to implement functions including: a medium information acquiring function of acquiring first identification information from a first storage medium and second identification information and tally information from a second storage medium, the first identification information identifying the first storage medium, the second identification information identifying the second storage medium; and a medium information transmitting function of transmitting the acquired first identification information, second identification information and tally information to the authentication server (forty-fifth constitution of the invention).

According to an even further aspect of the invention, there is provided an authentication requesting program for causing a computer to request an authentication server of claim 7 to perform an authentication process, the authentication requesting program causing the computer to implement functions including: a medium information acquiring function of acquiring first identification information from a first storage medium and tally information from a second storage medium, the first identification information identifying the first storage medium; a medium information transmitting function of transmitting the acquired first identification information and tally information to the authentication server; a tally information receiving function of receiving tally information from the authentication server; and a replacing function of replacing the tally information stored in the second storage medium with the tally information received by the tally information receiving means (forty-sixth constitution of the invention).

According to a still further aspect of the invention, there is provided a storage medium which stores an authentication requesting program in a manner readable by a computer for requesting an authentication server of claim 2 to perform an authentication process, the authentication requesting program causing the computer to implement functions including: a medium information acquiring function of acquiring first identification information from a first storage medium and tally information from a second storage medium, the first identification information identifying the first storage medium; and a medium information transmitting function of transmitting the acquired first identification information and tally information to the authentication server (forty-seventh constitution of the invention).

According to a yet further aspect of the invention, there is provided a storage medium which stores an authentication requesting program in a manner readable by a computer for requesting an authentication server of claim 3 to perform an authentication process, the authentication requesting program causing the computer to implement functions including: a medium information acquiring function of acquiring first identification information from a first storage medium and second identification information and tally information from a second storage medium, the first identification information identifying the first storage medium, the second identification information identifying the second storage medium; and a medium information transmitting function of transmitting the acquired first identification information, second identification information and tally information to the authentication server (forty-eighth constitution of the invention).

According to another aspect of the invention, there is provided a storage medium which stores an authentication requesting program in a manner readable by a computer for requesting an authentication server of claim 7 to perform an authentication process, the authentication requesting program causing the computer to implement functions including: a medium information acquiring function of acquiring first identification information from a first storage medium and tally information from a second storage medium, the first identification information identifying the first storage medium; a medium information transmitting function of transmitting the acquired first identification information and tally information to the authentication server; a tally information receiving function of receiving tally information from the authentication server; and a replacing function of replacing the tally information stored in the second storage medium with the tally information received by the tally information receiving means (forty-ninth constitution of the invention).

The present invention thus provides an authentication system offering high degrees of security and convenience using electronic tallies, as well as an authentication system that utilizes a plurality of storage media per user for secure authentication.

### Brief Description of Drawings

Fig. 1 is a conceptual view outlining an automatic log-in system embodying the invention;
Fig. 2 is an explanatory view schematically showing so-called tally technique;
Fig. 3 is a schematic view depicting a typical network configuration of the automatic log-in system embodying the invention;
Fig. 4 is a schematic view illustrating a typical logical structure of an IC card;
Fig. 5 is a block diagram schematically indicating a functional structure of an automatic log-in unit;
Fig. 6 is a flowchart of steps for an automatic log-in from a terminal;
Fig. 7 is a block diagram schematically sketching a functional structure of a registration unit;
Fig. 8 is a flowchart of steps constituting a new registration process performed by the automatic log-in system;
Fig. 9 is a schematic view presenting a typical hardware structure of a server;
Fig. 10 is a schematic view outlining a typical hardware structure of the terminal;
Fig. 11 is a schematic view showing typical screen transitions on the terminal as it connects to a service site;
Fig. 12 is a schematic view of a typical top page;
Fig. 13 is a schematic view of a typical card log-in screen;
Fig. 14 is a schematic view of a typical ID association notification screen;
Fig. 15 is a schematic view of a typical ID association complete screen;
Fig. 16 is a schematic view of a typical portable memory setting screen;
Fig. 17 is a schematic view of a typical portable memory setting complete screen;
Fig. 18 is a flowchart of steps constituting an electronic tally generating process involving the use of portable memory-specific information;
Fig. 19 is a flowchart of steps constituting a log-in process involving the manual input of a password;
Fig. 20 is a conceptual view outlining an automatic log-in system practiced as a second embodiment of this invention;
Fig. 21 is a schematic view depicting a typical network configuration of the automatic log-in system as the second embodiment;
Fig. 22A is a block diagram schematically indicating a logical structure of an automatic log-in unit of the second embodiment, and Fig. 22B is a schematic view illustrating logical relations between those items of user authentication information which are stored in an authentication information database;
Fig. 23 is a flowchart of steps for logging in to a service site;
Fig. 24 is a flowchart of steps in which a user registers with a service site;
Figs. 25A, 25B and 25C are schematic views depicting how a single user typically uses IC cards and portable memories for authentication; and
Figs. 26A and 26B are schematic view illustrating how a plurality of users typically use IC cards and portable memories for authentication.

### Best Mode for Carrying Out the Invention

Preferred embodiments of this invention will now be described in detail with reference to the accompanying drawings.

### (1) Outline of an embodiment

This embodiment involves dividing original data including authentication information such as a password used for authentication into two electronic tallies, i.e., a user tally and a server tally. The user tally is managed by a user and the server tally by a server.

Upon log-in, the user transmits the user tally to the server along with card-specific information (to be read from an IC card in noncontact fashion) associated with the server tally.

The server searches through storage for the server tally, i.e., counterpart of the user tally, using the card-specific information. When the server tally is retrieved, the server reconstitutes the original data using both the server tally and the user tally. The server then authenticates the user by use of the reconstituted original data.

Each conventional electronic tally typically had an identification area in which was written information for identifying the counterpart of the tally in question. That means a single electronic tally was sufficient for identifying the counterpart tally. With this embodiment, by contrast, the user tally is separated from information for specifying the server tally as the counterpart of the user tally. The two tallies need to be sent separately to the server. It follows that even if the user tally leaks to a third party, the third party will not be authenticated using the user tally alone.

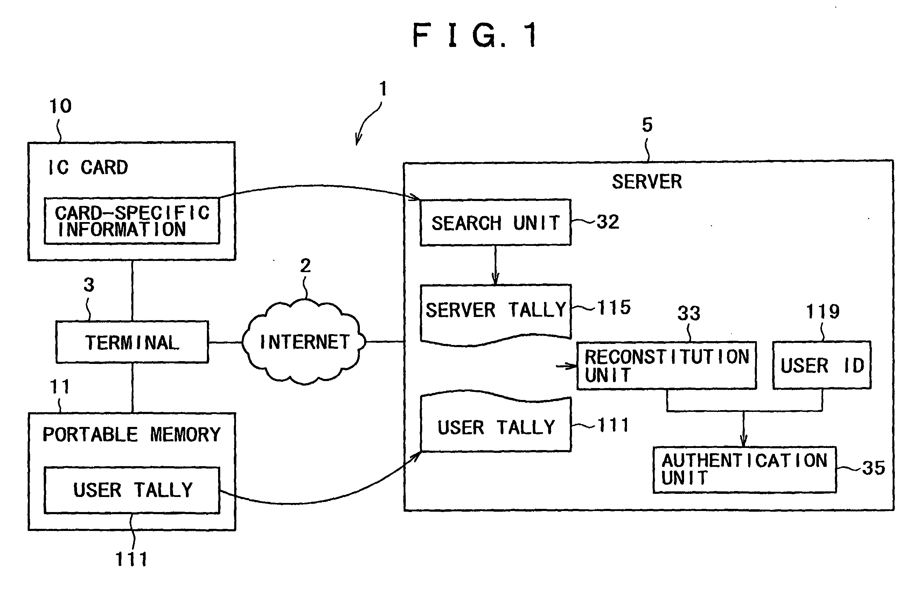

Fig. 1 is a conceptual view outlining an automatic log-in system embodying the invention. A user tally is stored in a portable memory 11, an external storage medium that is manually transportable. Card-specific information is stored in a noncontact type IC card 10.

With this embodiment, a server 5 associates the card-specific information with the server tally. When logging in from a terminal 3 to a service site established in the server 5, the user sets the portable memory 11 and IC card 10 to the terminal 3.

The terminal 3 reads card-specific information from the IC card 10 and the user tally 111 from the portable memory 11. The information and the user tally thus read are transmitted to the server 5 over the Internet 2.

In the server 5, a search unit 32 searches for the server tally that is associated with the card-specific information received.

A reconstitution unit 33 reconstitutes the original data using the retrieved server tally 115 and the user tally 111 received from the terminal 3.

An authentication unit 35 authenticates the user by use of a password included in the original data and a user ID 119 associated with the password in carrying out a log-in process.

As described, this embodiment involves dividing card-specific information from the noncontact type IC card 10 and a password into electronic tallies (user tally 111 and server tally 115) which are meaningless when taken singly. The server tally 115 is stored into the server 5 and the user tally 111 into the portable memory 11, a manually transportable external storage medium.

At the time of authentication, the server matches the server tally 115 and the user tally 111 through the use of the card-specific information from the IC card 10 so as to reconstitute the password.

### (2) Details of the embodiment

This embodiment utilizes electronic tallies generated by use of the so-called tally technique for authenticating users.

The tally technique involves dividing by suitable logic a set of original data to be protected into a plurality of electronic tallies (tally information) which are meaningless when taken singly. That is, any one of the divided tallies is not sufficient for reconstituting the original data.

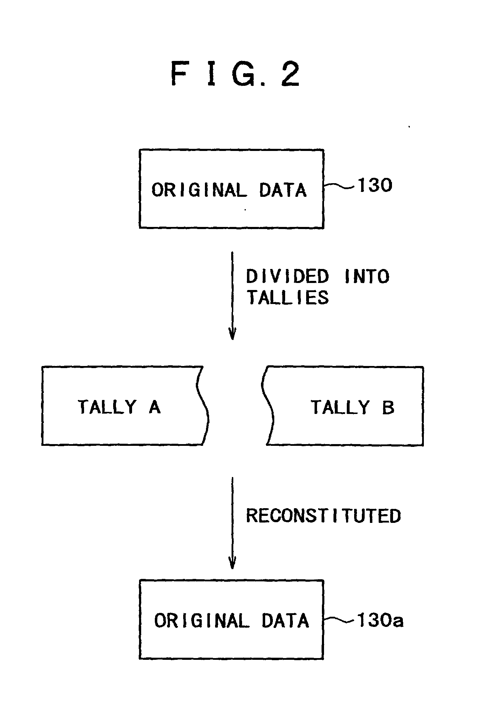

The tally technique is explained conceptually below with reference to Fig. 2.

Original data 130 to be protected are divided by suitable logic into a plurality of electronic tallies. In this example, the original data are divided into two parts, a tally A and a tally B.

The tallies A and B are meaningless when taken singly. Reconstituting the original data requires anyone in possession of one tally to get hold of the counterpart tally. There is no way in which the original data or the counterpart tally can be surmised from any one of the tallies. Even if the two tallies A and B were obtained unscrupulously, simply putting them together will not reconstitute the original data. The original data are acquired by performing a reconstituting process that reverses the dividing process executed earlier by use of predetermined logic.

As shown in Fig. 2, the original data 130a are obtained by combining the tallies A and B and subjecting the combination to the reconstituting process. The original data 130 and the reconstituted data 130a are identical.

As described, to reconstitute the original data requires collecting all divided electronic tallies and subjecting them to the reconstituting process.

A high degree of security is maintained when the generated electronic tallies are kept separately.

Alternatively, part of the electronic tallies may be collected so as to reconstitute part of the original data.

As original data, this embodiment adopts both a password for authenticating a user and card-specific information held in a noncontact ID card in the user' s possession. Although it is possible to build an automatic log-in system 1 by adopting only the password as original data and dividing it into tallies, this embodiment divides both the card-specific information and the password into tallies because this turns out to facilitate authentication work.

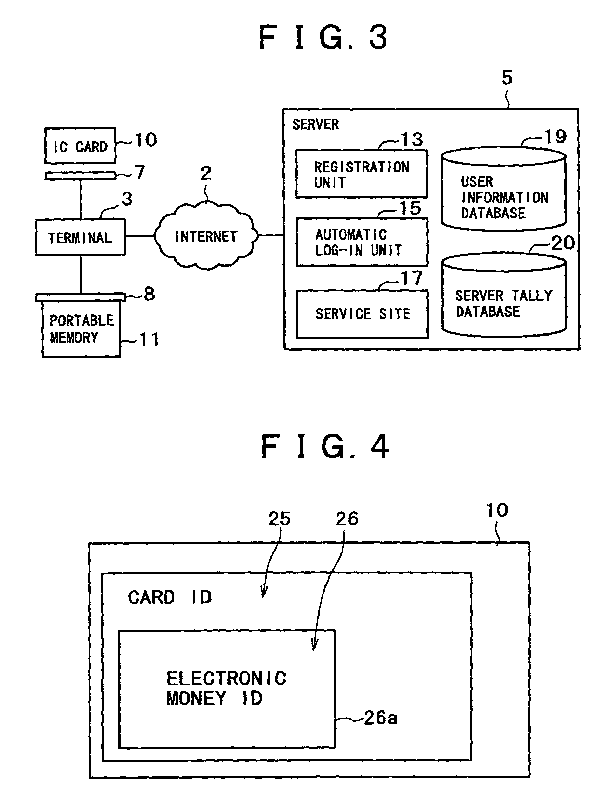

Fig. 3 is a schematic view depicting a typical network configuration of the automatic log-in system 1 embodying the invention.

The automatic log-in system 1 comprises the server 5 in which a service site is established, the terminal 3 that utilizes the service site, and the Internet 2 for connecting the terminal 3 with the server 5 in networked fashion.

The terminal 3 is illustratively made up of a personal computer that has a browser. The user at the terminal 3 may utilize the service site 17 established in the server 5 through the Internet 2.

Although Fig. 3 shows only one terminal 3 for purpose of simplification and illustration, a plurality of terminals 3 may be configured for connection to the server 5 via the Internet 2.

The terminal 3 has a reader/writer 7 as a peripheral device. The reader/writer 7 writes or reads data to or from the IC card 10 in noncontact fashion.

The IC card 10 (first portable storage medium, first storage medium) is a portable storage medium that contains an antenna for generating electrical power and transmitting and receiving signals, as well as a semiconductor chip that has a storage unit for storing data and programs and an arithmetic unit for carrying out arithmetic operations. When the IC card 10 is held close to the reader/writer 7, radio waves emanating from the reader/writer 7 cause the IC card 10 to generate power that drives the semiconductor chip inside.

With the semiconductor chip thus activated, data are exchanged by radio between the reader/writer 7 and the IC card 10. This allows a CPU (central processing unit) of the terminal 3 to write or read the data to or from the semiconductor chip in the IC card 10.

This embodiment utilizes a noncontact type IC card 10. Alternatively, the IC card 10 for use with the embodiment may be a contact type IC card or a contact type magnetic card.

The contact type IC card with its contact points, when in use, is brought into contact with electrodes of the reader/writer. The contact thus established allows data to be written or read to or from an IC chip in the contact type IC card.

The contact type magnetic card with its magnetic band is brought into contact with a magnetic head of the reader/writer for data read and/or write operations.

Where the noncontact IC card is adopted as the IC card 10, simply holding the card over the reader/writer 7 allows data to be written or read. The absence of a card inserting mechanism contributes to the user' s ease of use. Since there is no need for card-handling mechanisms or contact sections, the cost involved is reduced. The absence of contacts minimizes troubles conventionally attributed to a worn or faulty contact.

Furthermore, a noncontact or contact type IC card used as a storage medium proves convenient because it can be carried easily in the user' s wallet or pocket. Another advantage is that unlike magnetic cards, the noncontact or contact type IC card has no magnetic parts susceptible to magnetic data corruption.

Fig. 4 schematically illustrates a typical logical structure of the IC card 10.

Although not shown, the semiconductor chip in the IC card 10 has its internal structure divided logically into areas for use by a plurality of application programs.

With this embodiment, the IC card 10 has a logical area that accommodates electronic money. As such, the IC card 10 may be used as an instrument for payment in electronic money.

Electronic money is implemented by having the IC card 10 charged by an appropriate charger with exchangeable values. Upon settlement of an account, a value corresponding to the necessary payment is deducted from the IC card 10.

The IC card 10 used as an electronic money device thus operates under a prepaid settlement scheme.

The IC card 10 was shown equipped with the electronic money function not as necessary means for the automatic log-in feature but merely as an example of the capability to let the inventive automatic log-in system be used in conjunction with an application program.

The functionality of the IC card 10 is not limited to automatic log-in. The IC card 10 may be arranged to make its electronic money function available or permit access to information stored in a portable storage medium following an authentication process based on the authentication information acquired as described above.

In the IC card 10, a card ID (unique ID) 25 is stored in an incorruptible manner (Fig. 4). The card ID 25 is not indicated on the surface of the IC card 10 (so as not to be detected visually); it is a secret password that cannot be known easily to any who handles the card. The terminal 3 can read the card ID 25 using the reader/writer 7.

The IC card 10 is provided with an area 26a that accommodates electronic money. In addition, the IC card 10 stores incorruptibly a unique electronic money ID necessary for receiving electronic money services.

The electronic money ID is printed on the surface of the IC card 10. By resorting to the printed electronic money ID, the user can query an electronic money operator or perform other relevant operations.

In the description that follows, card-specific information, i.e., information unique to the IC card 10, will be constituted by a combination of the card ID 25 and electronic money ID 26. The server 5 associates each server tally (first tally information) with the corresponding combination of the card ID 25 and electronic money ID 26. In this manner, the card-specific information is utilized as identification information for identifying the server tally.

Although this embodiment uses card-specific information as the identification information, this does not mean the identification information is limited to the card-specific information. Any other information may be used if it is suitably associated with the server tally. For example, user identification information such as a password, a pass phrase or a user ID associated with a server tally may be stored in the IC card 10 for use as the identification information.

Furthermore, although this embodiment utilizes the combination of the card ID 25 and electronic money ID 26 as the card-specific information, this does not mean the content of the card-specific information is limited to that particular combination. Alternatively, the card ID 25 or electronic money ID 26 may be used singly as the card-specific information. As another alternative, particular information for use with another application program utilizing the IC card 10 may be used as the card-specific information.

Using the electronic money ID 26 as the card-specific information is convenient for those who respond to queries from the user when handling the IC card 10. That is because the electronic money ID 26 is visibly inscribed on the surface of the IC card 10.

The card-specific information is not the only resource with which to search for the server tally. Any other personal information specific to the individual who owns the card may be used as trigger data prompting a search for the server tally.

Returning to Fig. 3, the terminal 3 has a portable memory drive 8 that writes and reads data to and from the portable memory 11.

The portable memory 11 may be loaded detachably into the portable memory drive 8. The CPU of the terminal 3 writes and reads data to and from the portable memory 11 loaded in the portable memory drive 8.

The portable memory 11 (second portable storage medium, second storage medium) is illustratively a memory card incorporating a memory device that is both readable and writable in nature. In any case, the memory 11 is a nonvolatile, transportable storage medium that may be attached and detached to and from the terminal 3.

The portable memory 11 is furnished with a portable memory-specific information (portable memory ID). The terminal 3 can read the information specific to the portable memory 11 but is not allowed to rewrite the information held in the memory 11.

With this embodiment, a user tally (second tally information) derived from original data for authentication is stored into the portable memory 11. At the time of authentication, the terminal 3 retrieves the user tally from the portable memory 11.

It should be noted that this embodiment does not allow the user tally held in a given portable memory 11 to be copied into another portable memory 11 for use in authentication.

The copy-disabling scheme is accomplished illustratively by encrypting the user tally, with the portable memory-specific information used as a decryption key. Under this scheme, the encrypted user tally cannot be decrypted using any other portable memory-specific information. Alternatively, at the time of authentication, the user tally is transmitted to the server 5 along with the portable memory-specific information so that the server 5 may verify whether the user tally and the portable memory-specific information correspond to each other.

In another arrangement, as will be discussed later, the portable memory-specific information may be used as part of the original data from which the tallies are derived. This arrangement renders the user tally unusable upon authentication if it is copied to any other portable memory 11.

Using the browser, the terminal 3 gains access to servers on the Internet 2. When connection is established with any one of these servers, the terminal 3 can receive services from service sites set up by that server.

From each of these service sites, the browser may download HTML (Hypertext Markup Language) files or XML (Extensible Markup Language) files, reproduce images and sounds from the downloaded files, and transmit user-input information (password for authentication, responses to questionnaires, etc.) to the service site being accessed.

In order to supplement its standard functions, the browser on the terminal 3 may install an auxiliary program for purpose of functional expansion into the terminal 3.

More specifically, this embodiment enables the terminal 3 to implement an automatic log-in function by having the browser download a particular auxiliary program (to be discussed later) from the server 5 and install the downloaded program into the terminal 3.

The automatic log-in function illustratively works as follows: when the user clicks on a log-in button on a log-in screen, the terminal 3 is arranged to read the card-specific information from the IC card 10 and send the retrieved information to the server 5, as well as to read the user tally from the portable memory 11 and transmit the tally to the server 5.

Although this embodiment is arranged to download the auxiliary program from the server 5 and install the downloaded program into the terminal 3, this is not limitative of the invention. Alternatively, the user can purchase a browser that is equipped in advance with the automatic log-in function.

The server 5 provides services to previously registered users.

The services to be offered illustratively include: sites for permitting electronic banking or securities transactions; sites for offering diverse kinds of entertainment such as movies, music, and video games; sites for selling downloadable software; sites for mail-order businesses; and sites for providing data searches through databases.

The server 5 comprises functional units such as a registration unit 13, an automatic log-in unit 15 and a service site 17, as well as databases including a user information database 19 and a server tally database 20.

The service site 17 offers various services in response to requests from the terminal 3.

The automatic log-in unit 15 is a functional unit that authenticates the user by resorting to the card-specific information and user tally sent from the terminal 3. As will be discussed later in more detail, the automatic log-in unit 15 searches for the server tally that is associated with the card-specific information from the terminal 3. When the server tally is detected and retrieved, the automatic log-in unit 15 reconstitutes the original data from both the server tally and the user tally sent from the terminal 3. A password or other suitable information is then retrieved from the original data by the unit 15 for use in user authentication.

The registration unit 13 is a functional unit that permits registration of new users desirous of utilizing the service site 17. Following a new user's registration with the registration unit 13, the automatic log-in unit 15 carries out an authentication process on the user.

The user information database 19 accommodates information about the users who have registered with the registration unit 13. Specifically, the user information database 19 contains authentication information (password, user ID) for authenticating each user, information about the IC card 10 owned by the user in question (card ID, electronic money ID, etc.), and the user's personal information (name, age, gender, address, workplace, hobby, etc.).

The server tally database 20 contains server tallies corresponding to the user tallies of the registered users. Each server tally held in the server tally database 20 is associated with the card-specific information of the IC card owned by the applicable user. Given the card-specific information from the terminal 3, a search is made for the server tally through the database 20 using the received information.

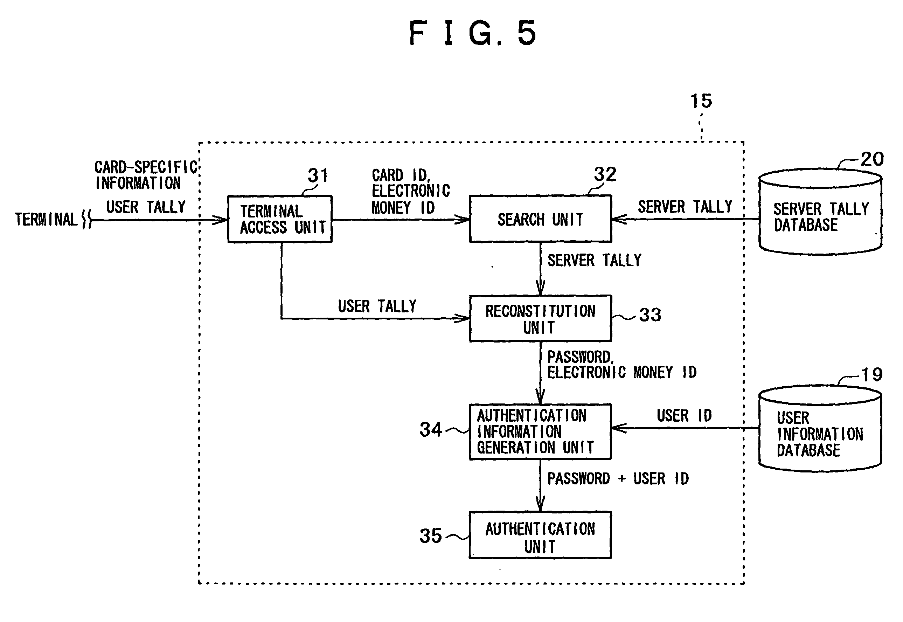

Fig. 5 is a block diagram schematically indicating a functional structure of the automatic log-in unit 15.

The automatic log-in unit 15 includes a terminal access unit 31, a search unit 32, reconstitution unit 33, an authentication information generation unit 34, and an authentication unit 35.

The terminal access unit 31 (identification information acquisition unit, second tally information acquisition unit, receiving means) exchanges data with the terminal 3. More specifically, the terminal access unit 31 transmits log-in screen data to the accessing terminal 3, and receives card-specific information and a user tally sent from the terminal 3 in response to the log-in screen data.

The terminal access unit 31 verifies whether the card-specific information and user tally are sent from the same terminal 3. The automatic log-in unit 15 is arranged to deny authentication if the card-specific information and the user tally are sent separately from different terminals 3. This is an additional measure of security.

The search unit 32 (first tally information searching means, searching means) receives card-specific information from the terminal access unit 31, and searches the server tally database 20 for the server tally that matches the received card-specific information. As described above, each server tally is associated with relevant card-specific information. The received card-specific information thus allows the search unit 32 to search for the server tally corresponding to the user requesting a log-in.

The reconstitution unit 33 (authentication information acquiring means) acquires the server tally retrieved by the search unit 32 and obtains the user tally from the terminal access unit 31. Using both the server tally and the user tally, the reconstitution unit 33 reconstitutes the original data. With this embodiment, the reconstituted original data yield the password and the card-specific information.

Although this embodiment utilizes the password and card-specific information as the original data, this is not intended to limit the content of the original data. Any information that may be used as identification information for authenticating the user may be adopted as the original data. An example in which portable memory-specific information is used as the original data will be discussed later.

The authentication information generation unit 34 (authentication information acquiring means) acquires the reconstituted password and card-specific information from the reconstitution unit 33. The authentication information generation unit 34 then searches the user information database 19 for the user ID associated with the password and card-specific information.

Based on the password and the retrieved user ID, the unit 34 generates authentication information and forwards the generated information to the authentication unit 35.

With this embodiment, the password and user ID are arranged to constitute the authentication information, and the password is divided into tallies. Turning part of the authentication information (i.e., password) into tally information provides an added measure of security.

Although the user ID is associated with both the password and the card-specific information for this embodiment, this is not limitative of the invention. Alternatively, the user ID may be associated singly with the password, with the card-specific information, or with either one of the card ID and electronic money ID making up the card-specific information.

The authentication unit 35 (authenticating means, log-in means) acquires authentication information (password and user ID) from the authentication information generation unit 34, and authenticates the user based on the acquired information. When the user is successfully authenticated, the authentication unit 35 allows the user to log in to the service site 17. If the user is not authenticated, the authentication unit 35 denies log-in and sends an error message to the terminal 3.

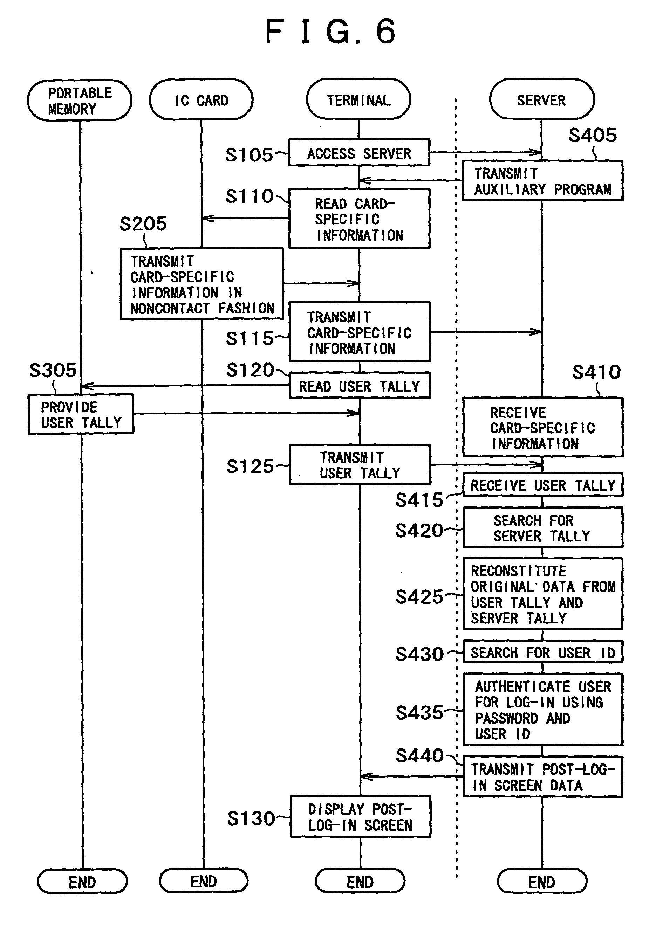

Fig. 6 is a flowchart of steps in which the user at the terminal 3 logs in to the service site 17 when the automatic log-in system 1 is in operation.

The steps below are carried out by the CPU of the terminal 3 and that of the server 5 in accordance with appropriate programs.

Using the browser, the user at the terminal 3 gains access to the server 5 illustratively by inputting a URL (Uniform Resource Locator) of the service site 17 (step 105).

The terminal access unit 31 sends to the terminal 3 an auxiliary program for implementing the automatic log-in function at the terminal 3 (step 405).

The auxiliary program causes the terminal 3 to provide such functions as reading the card-specific information from the IC card 10 when the user accesses the service site 17 through the terminal 3, reading the user tally from the portable memory 11, and transmitting the card-specific information and user tally thus read to the server 5.

As will be described later, the auxiliary program also assists a new user in registering with the server 5.

If the auxiliary program is deemed already installed in the terminal 3, such as when the user is found accessing the server 5 for a second time or on a later pass, the server 5 will not transmit the auxiliary program in step 405.

The terminal 3 receives and installs the auxiliary program. In keeping with the auxiliary program thus installed, the terminal 3 drives the reader/writer 7 so as to access the IC card 10 (step 110). If the IC card 10 is not found set to the reader/writer 7, a message such as "Please set the IC card" appears, prompting the user to put the IC card in position.

The IC card 1 then sends the card-specific information to the terminal 3 by communicating with the reader/writer 7 in noncontact fashion (step 205).

The terminal 3 acquires the card-specific information through the reader/writer 7, and transmits the acquired information to the server 5 (step 115).

The server 5 receives the transmitted card-specific information (step 410).

The terminal 3 then reads the user tally from the portable memory 11 by operating the portable memory drive 8 (step 120). If the portable memory 11 is not found set in the portable memory drive 8, a message such as "Please set the portable memory" appears, prompting the user to set the portable memory 11.

The portable memory 11 provides the stored user tally to the terminal 3 via the portable memory drive 8 (step 305).

In turn, the terminal 3 sends to the server 5 the user tally acquired from the portable memory 11 (step 125).

In the server 5, the terminal access unit 31 receives the user tally (step 415).

In the foregoing steps, the terminal 3 was shown first reading the card-specific information and sending the information to the server 5 (step 115), then reading the user tally and transmitting the tally to the server 5 (step 125). However, this is not limitative of the invention. Alternatively, the terminal 3 may read the card-specific information and user tally and transmits the two kinds of information altogether to the server 5.

As another alternative, the terminal 3 may first send the user tally to the server 5 and subsequently transmit the card-specific information.

The search unit 32 receives the card-specific information from the terminal access unit 31. Based on the received information, the search unit 32 searches the server tally database 20 for the server tally corresponding to the user in question (step 420).

The reconstitution unit 33 receives the user tally from the terminal access unit 31 and the server tally from the search unit 32. Out of the user tally and server tally received, the reconstitution unit 33 reconstitutes the original data (password and card-specific information) (step 425).

The authentication information generation unit 34 receives the reconstituted password and card-specific information from the reconstitution unit 33. The generation unit 34 then searches the user information database 19 for the user ID that is associated with the received password and card-specific information (step 430).

The authentication unit 35 receives the authentication information (password and user ID) from the authentication information generation unit 34. Based on the received information, the authentication unit 35 performs an authenticating process on the user (step S435).

If the user is successfully authenticated, the server 5 transmits post-log-in screen data (i.e., data constituting a screen to be displayed by the browser on the terminal 3 after the log-in) to the terminal 3 (step 440).

The terminal 3 receives the post-log-in screen data to let the browser display a post-log-in screen using the received data (step 130).

If the user is not successfully authenticated, the server 5 transmits error message screen data to the terminal 3.

Although this embodiment is arranged to have the server 5 authenticate the user, the structure of the server is not limited to this arrangement. Alternatively, a dedicated authentication server may be provided for use in user authentication. Only those users who have been authenticated by such an authentication server may then be allowed to receive services from the server 5.

As another alternative, there may be provided a dedicated server that enables a log-in ID and a password to be acquired from a user tally and a server tally per user. That dedicated server may furnish any server requested for a log-in by a user with information necessary for the log-in process.

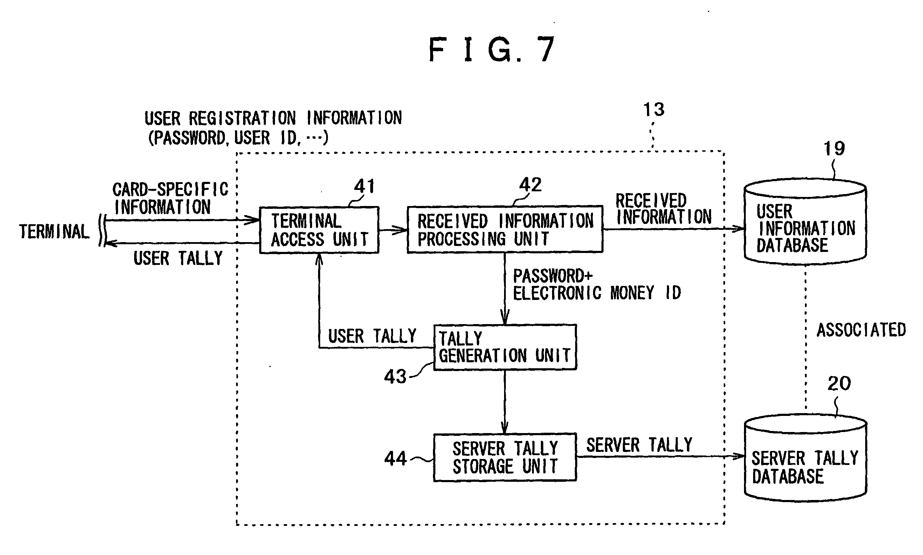

Fig. 7 is a block diagram schematically sketching a functional structure of the registration unit 13.

The registration unit 13 includes such functional units as a terminal access unit 41, a received information processing unit 42, a tally generation unit 43, and a server tally storage unit 44.

The terminal access unit 41 (registration information acquiring means, second tally information transmitting means) sends registration screen data to a newly registering user, receives and processes registration information input by the user through a registration screen, and transmits a generated user tally to the terminal 3.

The registration screen through which the user inputs information preparatory to receiving the automatic log-in service includes fields in which to enter authentication information (password, user ID, etc.) and fields in which to input the user's personal information (name, age, gender, address, workplace, hobby, etc.). That is, the registration information subsumes the authentication information.

The information the terminal access unit 41 receives from the terminal 3 at the time of user registration includes the card ID 25 read by the terminal 3 from the IC card 10, in addition to the information entered by the user through the registration screen. If the server 5 is arranged to make use of portable memory-specific information, the terminal access unit 41 also receives the portable memory-specific information retrieved from the portable memory 11.

The received information processing unit 42 receives the information from the terminal access unit 41. Based on the received information, the processing unit 42 updates the user information database 19 by writing the user information about the newly registering user to the database. At the same time, the received information processing unit 42 sends the password and card-specific information included in the received information to the tally generation unit 43.

The tally generation unit 43 (tally information generating means) turns the password and card-specific information received from the received information processing unit 42, into a user tally and a server tally. The user tally thus generated is transmitted from the terminal access unit 41 to the terminal 3. In turn, the terminal 3 receives the user tally and stores it into the portable memory 11.

The server tally is placed into the server tally database 20 by the server tally storage unit 44 (associating means, storing means).

In addition, the server tally storage unit 44 associates the server tally placed in the server tally database 20 with the card-specific information (combination of the card ID and electronic money ID) stored in the user information database 19. The association permits a search for the server tally in keeping with the corresponding card-specific information.

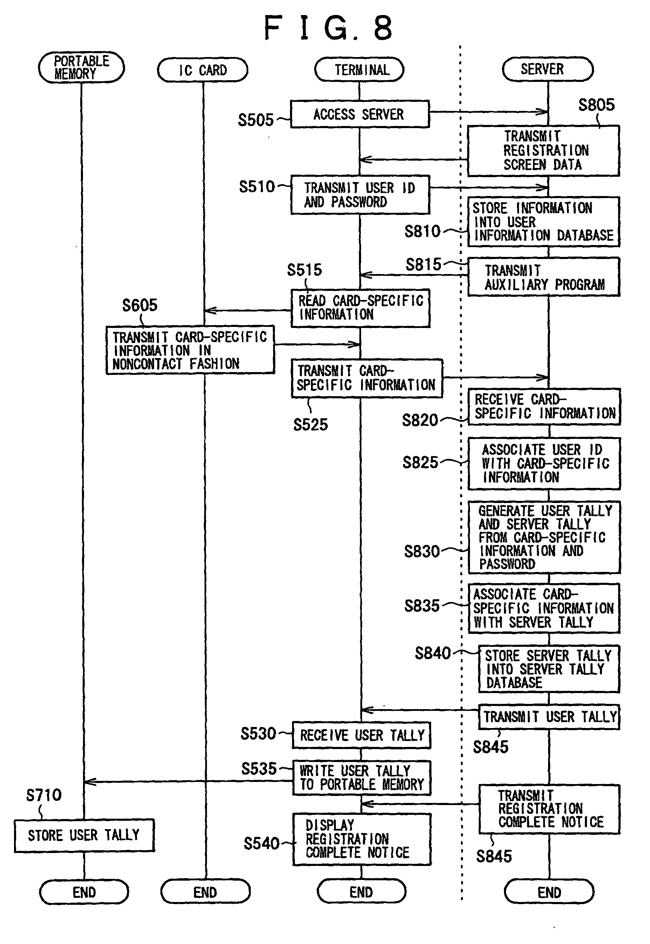

Fig. 8 is a flowchart of steps in which the user at the terminal 3 registers with the service site 17 when the registration unit 13 of the automatic log-in system 1 is in operation.

The steps below are carried out by the CPU of the terminal 3 and that of the server 5 in accordance with appropriate programs.

The user at the terminal 3 gains access to the server 5 (step 505). Given top page data from the server 5, the user clicks on a new-registration button or performs some other suitable operation to send to the server 5 information indicating the user' s willingness to register anew.

In response, the terminal access unit 41 in the server 5 transmits registration screen data to the terminal 3 (step 805).

The terminal 3 receives the registration screen data. The browser utilizes the received data to let the user input entry items. The user inputs a password, a user ID, and other relevant information into the displayed registration screen and sends what is input to the server 5 (step 510). Where the user already has the user ID, that ID is input through the registration screen. If the user has yet to acquire a user ID, the user obtains one by making the registration. Alternatively, the server 5 may automatically set a user ID for the newly registering user.

The server 5 updates the user information database 19 using the information received from the terminal 3 by the received information processing unit 42, whereby new user information is stored (step 810).

The terminal access unit 41 in the registration unit 13 sends the auxiliary program to the terminal 3 (step 815). At the time of user registration, the auxiliary program allows the terminal 3 to read the card ID 25 and electronic money ID 26 from the IC card 10, send the retrieved ID' s to the server 5, and write a user tally to the portable memory 11. If the auxiliary program is already installed or if the browser has a preinstalled auxiliary program, this step is skipped.

The terminal 3 installs the auxiliary program received from the server 5. In keeping with the installed auxiliary program, the terminal 3 operates the reader/writer 7 to start reading the card-specific information from the IC card 10 (step 515).

The IC card 10 set on the reader/writer 7 sends the card-specific information to the terminal 3 in noncontact fashion (step 605).

In turn, the terminal 3 transmits to the server 5 the card-specific information retrieved from the IC card 10 (step 525).

In the server 5, the terminal access unit 41 receives the card-specific information (step 820).

The received information processing unit 42 stores the received information into the user information database 19, and associates the user ID with the card-specific information (step 825).

The tally generation unit 42 then turns the password and card-specific information into a user tally and a server tally (step 830).

The server tally storage unit 44 associates the generated server tally with the card-specific information (step 835) and places the server tally into the server tally database 20 (step 840).

The terminal access unit 41 receives the generated user tally from the tally generation unit 43 and sends the received tally to the terminal 3 (step 845).

The terminal 3 receives the user tally sent from the terminal access unit 41 (step 530).

The terminal 3 then operates the portable memory drive 8 to write the received user tally to the portable memory 11 (step 535).

The portable memory 11 stores the user tally (step 710).

The terminal access unit 41 sends a registration-complete notice to the terminal 3 (step 850).

The terminal 3 receives the registration-complete notice and causes the browser to display the received notice (step 540).

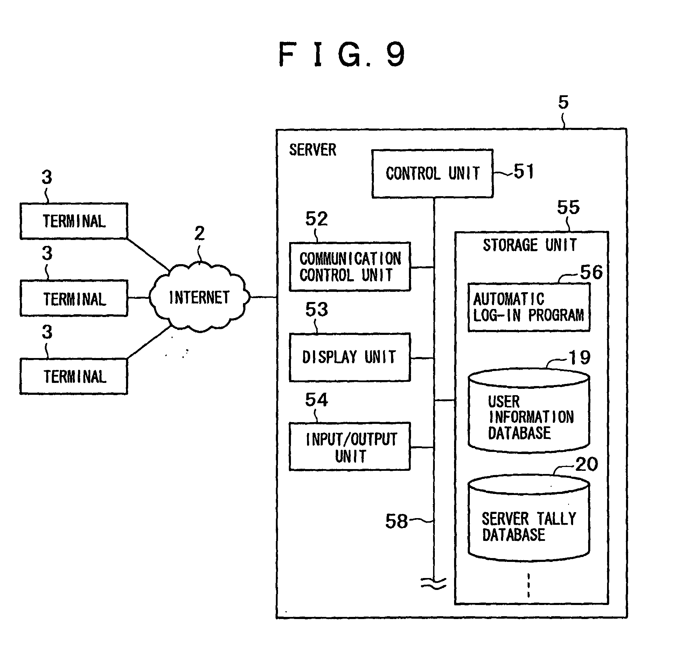

Fig. 9 is a schematic view presenting a typical hardware structure of the server 5.

As shown in Fig. 9, the server 5 comprises a control unit 51, a communication control unit 52, a display unit 53, an input/output unit 54, a storage unit 55, and a bus line 58 that permits exchanges of data and control signals between these components.

The control unit 51 is made up of a CPU, a ROM (read only memory), and a RAM (random access memory). The CPU performs various calculations, controls the server 5 as a whole, and conducts communications over the Internet 2 in accordance with suitable programs. With this embodiment, the control unit 51 carries out the registration of the user requesting an automatic log-in, and authenticates the user accessing the service site 17 in an automatic log-in process in keeping with an automatic log-in program.

The communication control unit 52 communicates with a plurality of terminals 3 over the Internet 2. Illustratively, protocols such as TCP/IP (Transmission Control Protocol/Internet Protocol) are used for control over communications with the terminals 3.

The display unit 53 is constituted by a CRT (cathode ray tube) or some other suitable display device, and is used illustratively by a server administrator in maintaining and managing the server 5. The display unit 53 may display a listing of the data held in the user information database 19 and server tally database 20.

The input/output unit 54 is made up illustratively of input devices such as keyboard and a mouse, of a storage medium drive for driving a removable storage device, and of printing equipment such as a printer. As such, the input/output unit 54 may be operated to have the server 5 admit commands and data as well as output data.

The storage unit 55 is composed of a readable/writable storage device such as a mass storage hard disc drive.

The storage unit 55 accommodates an automatic log-in program 56, in addition to the user information database 19 and server tally database 20.

The automatic log-in program 56 is a program that causes the control unit 51 to carry out the automatic log-in function.

When the control unit 51 reads and executes the automatic log-in program 56, the registration unit 13 and automatic log-in unit 15 are implemented on a software basis.

Although not shown, the storage unit 55 retains an OS (operating system) for allowing the control unit 51 to perform basic functions such as file input and output. Also retained in the storage unit 55 are programs and data necessary for running the service site 17.

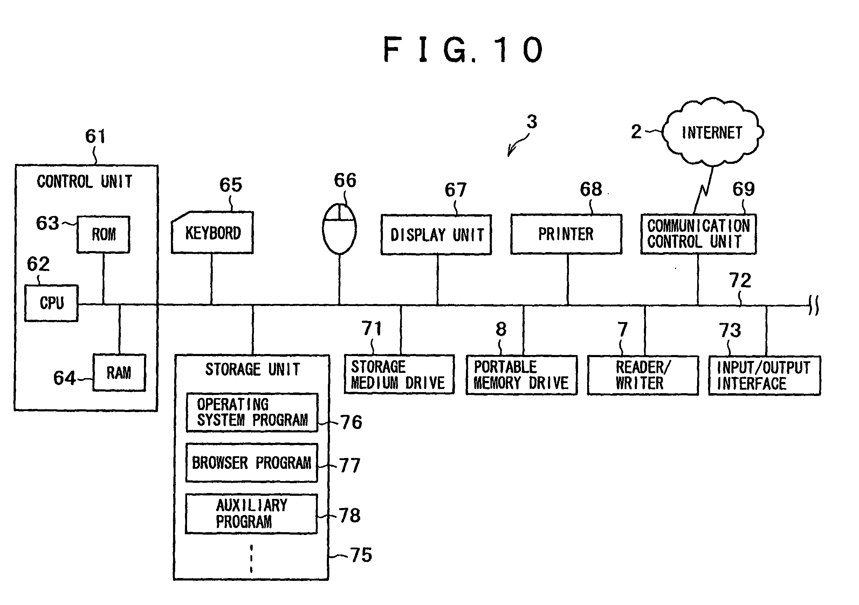

Fig. 10 is a schematic view outlining a typical hardware structure of the terminal 3.

With this embodiment, the terminal 3 is constituted by a personal computer. The terminal 3 has a control unit 61 connected via a bus line 72 with a keyboard 65, a mouse 66, a display unit 67, a printer 68, a communication control unit 69, an input/output interface 73, a reader/writer 7, a portable memory drive 8, a storage medium drive 71, and a storage unit 75.

The control unit 61 is made up of a CPU 62, a ROM 63, and a RAM 64.

The control unit 61 operates in keeping with programs such as an OS program 76 and a browser program 77 to carry out diverse functions: maintaining communication with the server 5; allowing the user to register for the automatic log-in function of the server 5; granting the user an automatic log-in to the service site 17 if the user has already registered; enabling the user to make use of the service site 17; and controlling the terminal 3 as a whole.

The CPU 62 is the principal device of the control unit 61. Loading programs from the ROM 63, from the storage unit 75, or from a storage medium driven by the storage medium drive 71, the CPU 62 controls the control unit 61 in accordance with the loaded programs. When operating in keeping with an auxiliary program 78, to be discussed later, the CPU 62 carries out further functions: transmitting card-specific information (as identification information transmitting means); transmitting a user tally (as second tally information transmitting means); transmitting registration information (as registration information transmitting means); and storing into the storage unit 75 the user tally received from the server 5 at the time of registration (as second tally information storing means).

The ROM 63 is a read-only memory that accommodates programs, data and parameters needed by the CPU 62 to carry out calculations and control operations.

The RAM 64 is a random access memory for use as a working memory by the CPU 62. The CPU 62 may write programs and data to the RAM 64 and delete what is being written from the RAM 64. With this embodiment, the RAM 64 provides areas allowing the user to register for automatic log-in to the server 5, areas for granting the user an automatic log-in to the service site 17, and areas permitting the user to make use of the service site 17.

The keyboard 65 is constituted by diverse kinds of keys: keys for inputting kana and alphabetic characters, a numeric key pad for inputting numbers, function keys, cursor keys and other keys.

The keyboard 65 is used illustratively to input user information to be sent to the server 5, and to enter information such as commands for operating the programs in use.

The mouse 66 is a pointing device that is used by the user to click on buttons and icons displayed on a GUI (Graphical User Interface) screen or the like on the terminal 3. Operating the mouse 66 allows the user to input relevant information in order to operate the terminal 3 as desired.

The display unit 67 is illustratively a CRT display, a liquid crystal display, a plasma display, or some other suitable display that is furnished to present information on its screen. The display unit 67 may display results of input from the keyboard 65 and/or the mouse 66, screens provided by the service site 17, and the registration screen for allowing the user to register for the automatic log-in function of the server 5.

The printer 68 is a device that prints results of program execution and other information on a suitable printing medium such as sheets of paper. The printer 68 is constituted illustratively by an ink jet printer, a laser printer, a thermal transfer printer, or a dot printer.

The communication control unit 69 is a device which connects the terminal 3 to the Internet 2 and which is made up of a modem, a terminal adapter, and other components.

The communication control unit 69 may be arranged to connect with the Internet 2 via a LAN (local area network).

Under control of the CPU 62, the communication control unit 69 performs send and receive operations according to a predetermined protocol (e.g., TCP/IP).

The storage unit 75 is composed of a readable/writable storage medium and a drive that writes and reads data to and from the storage medium. A hard disc is used primarily as the storage medium. Alternatively, some other readable/writable storage medium such as a magneto-optical disc, a magnetic disc, or a semiconductor memory may be used instead.

The storage unit 75 accommodates programs such as the OS program 76, browser program 77, and auxiliary program 78 as well as data.

The OS program 76 is a basic program that allows the terminal 3 to operate. One of the functions provided by the OS program 76 is the input and output of files.

The browser program 77 is a program which gains access to service sites established by the server 5 or other WWW (World Wide Web) servers and which causes the display unit 67 to display screens based on the screen data sent form the accessed sites. The browser program 77 can also reproduce voices and moving pictures from the received data.

The auxiliary program 78 is downloaded from the server 5 and installed in the terminal 3.

This program may be furnished as two separate programs, i.e., an auxiliary program for new registration and an auxiliary program for automatic log-in. The program 78 may alternatively be provided as a single program offering the two functions.

The auxiliary program 78 assists the browser program 77 in carrying out user registration or automatic log-in. More specifically, the auxiliary program 78 reads the card-specific information from the IC card 10 for transmission to the server 5 upon user registration or automatic log-in, reads the user tally from the portable memory 11 for transmission to the server 5 upon automatic log-in, or writes the user tally received from the server 5 to the portable memory 11 at the time of user registration.

The storage unit 75 accommodates additional data and programs such as those for controlling the communication control unit 69 or for operating the reader/writer 7 and portable memory drive 8.

The storage medium drive 71 is a drive that writes and reads data to and from a detachable storage medium other than the portable memory 11. The detachable storage media that may be handled by the drive 71 include a magneto-optical disc, a magnetic disc, a magnetic tape, a paper tape with data punched on the tape, and a CD-ROM. It should be noted that data can only be read from the CD-ROM or from the paper tape. The storage medium drive 71 may be used to write backup data to a suitable storage medium or to install application software from the loaded storage medium.

The input/output interface 73 is formed illustratively by a serial interface or an interface complying with other suitable standards. The terminal 3 is functionally expanded by attaching to the input/output interface 73 an external device that conforms to the interface standard being used. The external devices that may be attached include a storage unit such as a hard disc drive, as well as speakers and microphones.

The reader/writer 7 and the portable memory drive 8 were described above and thus will not be discussed further.

The automatic log-in function of the server 5 has been described above. The server 5 also has a log-in processing function that allows the user to log on in a conventional manner (i.e., by manually inputting authentication information and transmitting it to the server 5).

Where the IC card 10 and portable memory 11 are found set in the terminal 3, the user is granted an automatic log-in to the server 5. If the IC card 10 and portable memory 11 are not found set, the conventional log-in process needs to be performed.

Since the server 5 offers both the automatic log-in function and the conventional log-in function, it can deal with any users regardless of the resources they have.

Described below are typical screen transitions in effect when an automatic log-in process and a conventional log-in process are carried out.

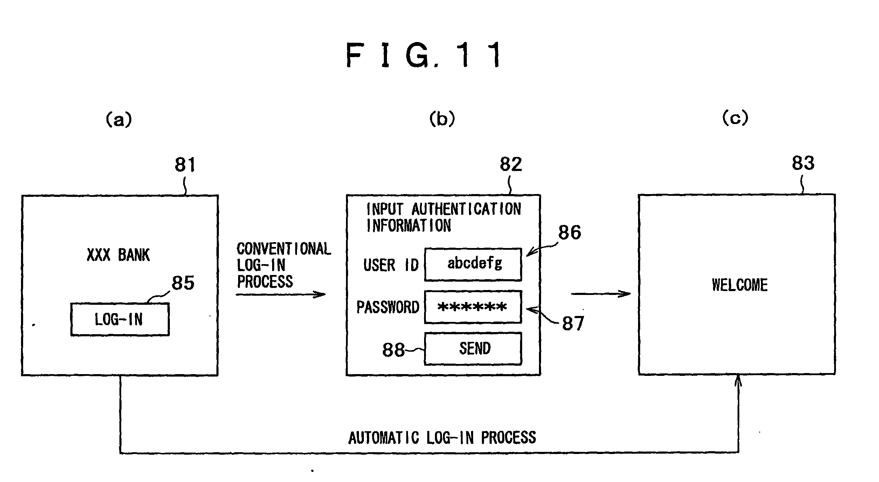

Fig. 11 is a schematic view representative of screen transitions on the terminal 3 in the automatic log-in process as well as in the conventional log-in process.

The screen transitions in effect during the automatic log-in process are described first.

The user at the terminal 3 inputs the URL of the service site 17 into the URL field of the browser. This causes the server 5 to transmit top screen data about the service site 17 to the terminal 3. Given the data, the display unit 67 of the terminal 3 displays a top screen 81 shown in (a) of Fig. 11.

The top screen 81 indicates a log-in button 85 that may be operated to log in to the service site 17.

Where the IC card 10 and portable memory 11 are set in the terminal 3, the user clicks on the log-in button 85. The click causes the terminal 3 to transmit to the server 5 the card-specific information read from the IC card 10 and the user tally from the portable memory 11. In turn, the server 5 performs the user authentication process and log-in process, before sending post-log-in screen data to the terminal 3.

The terminal 3 receives the post-log-in screen data and causes the display unit 67 to display a post-log-in screen 83 of (c) of Fig. 11 accordingly.

That is, where the automatic log-in process is performed, the user simply clicks on the log-in button 85 on the top screen 81. The post-log-in screen 83 then appears on the display, with no further operation carried out by the user.

The screen transitions in effect during the conventional log-in process will now be described. It is assumed that the IC card 10 and portable memory 11 are not set in the terminal 3.

The user first inputs the URL of the service site 17 through the browser. This causes the display unit 67 to display the top screen 81 of (a) of Fig. 11.

The user then clicks on the log-in button 85 on the top screen 81. The clicking action causes the terminal 3 to send to the server 5 information notifying the latter of the click on the log-in button 85. At this point, the terminal 3 informs the server 5 that neither the IC card 10 nor the portable memory 11 is being set. This causes the server 5 to conclude that the user wants the conventional log-in process and transmits the log-in screen data accordingly to the terminal 3.

Using the log-in screen data, the terminal 3 displays a log-in screen 82 shown in (b) of Fig. 11.

The log-in screen 82 has a user ID input field 86 and a password input field 87. The user inputs the user ID and password into these fields using the keyboard 65 or the like, and clicks on a send button 88. The click causes the terminal 3 to transmit the user-input user ID and password to the server 5.

The server 5 receives the user ID and password from the terminal 3 and uses them as a basis for carrying out the user authentication and log-in processes. After completing the log-in process, the server 5 transmits the post-log-in screen data to the terminal 3.

The terminal 3 receives the post-log-in screen data from the server 5, and causes the display unit 67 to display the post-log-in screen 83 of (c) of Fig. 11 accordingly.

In the above-described example, the conventional log-in process was shown carried out automatically if neither the IC card 10 nor the portable memory 11 was found set in the terminal 3. However, this is not limitative of the invention. Alternatively, the conventional log-in process may be initiated if either one of the IC card 10 or portable memory 11 is found set.

As another alternative, if neither the IC card 10 nor the portable memory 11 is found set when the log-in button 85 is clicked on, the user may be given a choice. That is, the user may be either prompted to set the IC card 10 and portable memory 11 for an automatic log-in, or asked to proceed conventionally for the log-in.

Other typical screen structures will now be described.

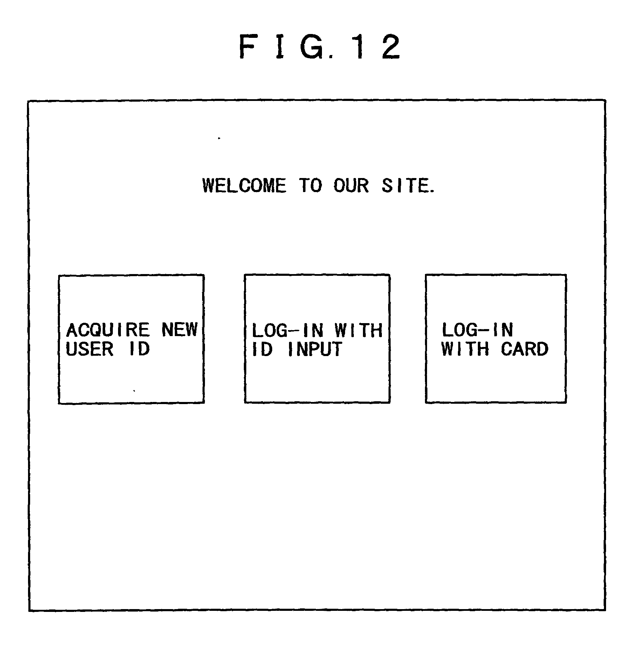

Fig. 12 is a schematic view of a typical top page provided by a service site implemented with this embodiment.

As illustrated, this top page indicates three items: "Acquire new user ID," "Log in with ID input," and "Log in with card." The user clicks on one of these items with the mouse. The click triggers a jump to the page corresponding to the user-selected item.

The item "Acquire new user ID" is selected by a user who wishes to register anew with this service site or who wants a new user ID to be issued in addition to the currently possessed user ID. Selecting this item triggers a jump to the registration screen through which the user may register anew or have a new user ID set or issued.

The item "Log in with ID input" is selected if the user wants to follow the conventional log-in procedure.

Selecting this item causes a jump to the conventional log-in screen through which a user ID and a password are to be manually input.

The item "Log in with card" is selected by the user wishing to log in using the IC card 10.

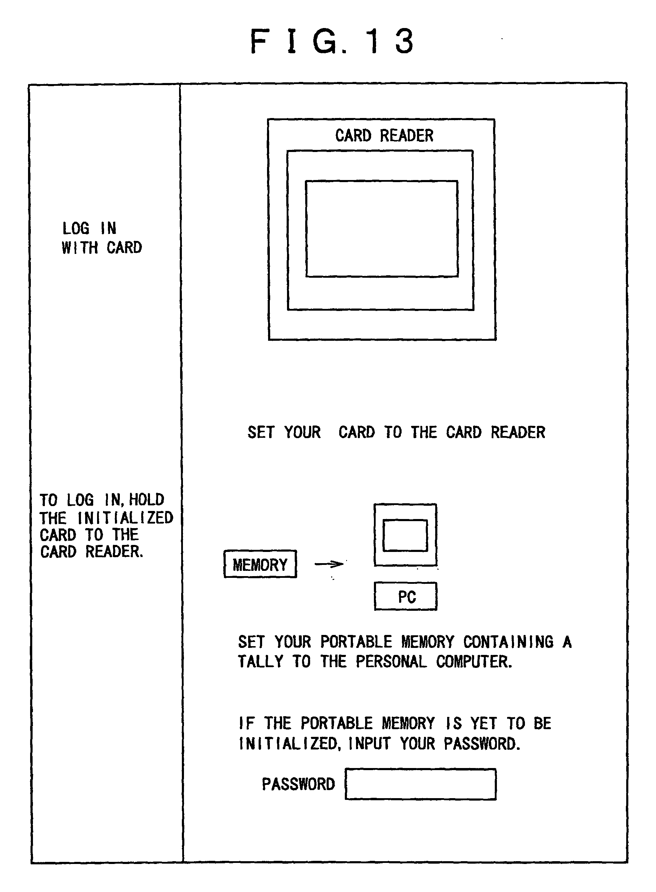

Selecting this item initiates a jump to a log-in-with-card screen shown in Fig. 13.

On the log-in-with-card screen, a message "Set your card to the card reader" prompts the user to sets the IC card 10 to the reader/writer 7. The reader/writer 7 starts polling the IC card 10 that has been set.

The log-in-with-card screen also displays a message "Set your portable memory containing a tally to the personal computer," prompting the user to set the portable memory 11 to the portable memory drive 8.

If the user has yet to initialize the portable memory 11 (i.e., where the IC card 10 is already associated with the user ID but the portable memory 11 is yet to be initialized to accommodate a tally), then the user inputs the password into a "Password" field. The log-in process involving the IC card and assisted by the external password input is utilized when the portable memory is yet to be initialized or when the portable memory has been initialized but the memory card is not in use.

As described, the log-in-with-card screen allows the user either to log in automatically using the IC card 10 and portable memory 11, or to log in semiautomatically by setting the IC card 10 while manually inputting the password.

If the IC card 10 and portable memory 11 are already set in the terminal 3, the log-in-with-card screen is skipped and automatic log-in is immediately effected.

If either one of the IC card 10 and portable memory 11 is already set in the terminal 3, no message will be displayed with regard to the installed device.

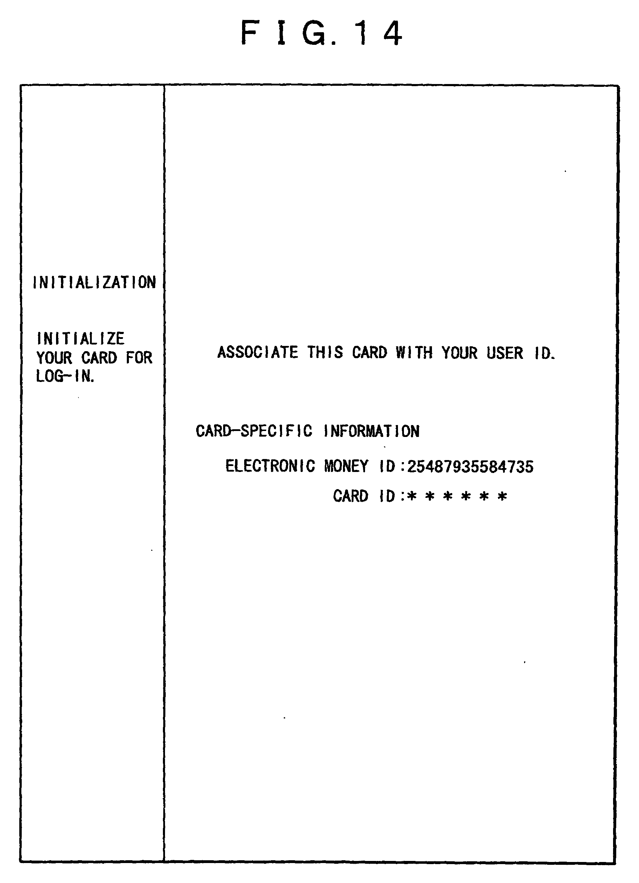

Fig. 14 schematically depicts a typical ID association notification screen displayed when the card-specific information in the IC card 10 is associated with the user ID during registration with the automatic log-in system.

When requested for registration, the automatic log-in system causes a screen to appear which prompts the user to set the IC card 10 to the reader/writer 7. When the user sets the IC card 10, the reader/writer 7 reads the card-specific information from the card. The retrieved information is displayed on the ID association notification screen. The card ID is a secret number that is represented illustratively by asterisks (*) on the screen so as not to be recognized visually by the user.

Clicking on a suitable button, not shown, transmits the card-specific information to the server 5. This causes the IC card to be associated with the user ID.

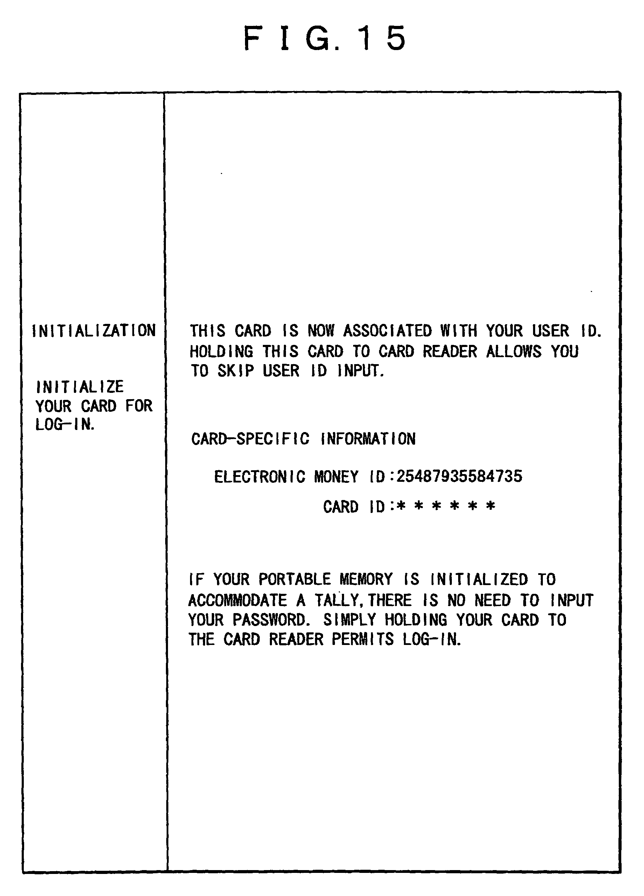

Fig. 15 schematically shows a typical ID association complete screen that appears when the association of card-specific information with a user ID has been completed.

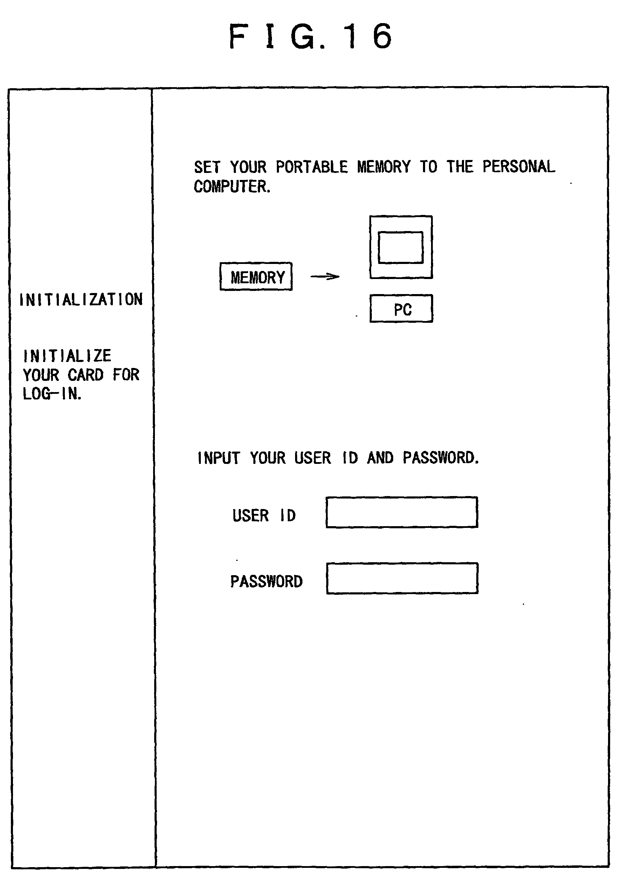

This screen displays a message saying that holding the IC card 10 to the reader/writer 7 substitutes for the input of a user ID. Also displayed is a message saying that initializing the portable memory 11 eliminates the need for inputting a password. Although not shown, the ID association complete screen displays a selection button for allowing the user to determine whether or not to initialize the portable memory 11. If the user decides to initialize the portable memory 11, a portable memory initialization screen of Fig. 16 appears.

If the user decides not to initialize the portable memory 11, then the user holds the IC card 10 to the reader/writer 7, and inputs the password manually for log-in.

In addition to the message prompting the user to set the portable memory 11 to the reader/writer 7, the portable memory initialization screen displays two fields: a user ID input field prompting the user to input the user ID for verification, and a password input field requesting the user to input the password from which to generate electronic tallies.

The user inputs the user ID and password and clicks on a send button, not shown. The click causes the input information to be transmitted to the server 5, whereby electronic tallies are generated.

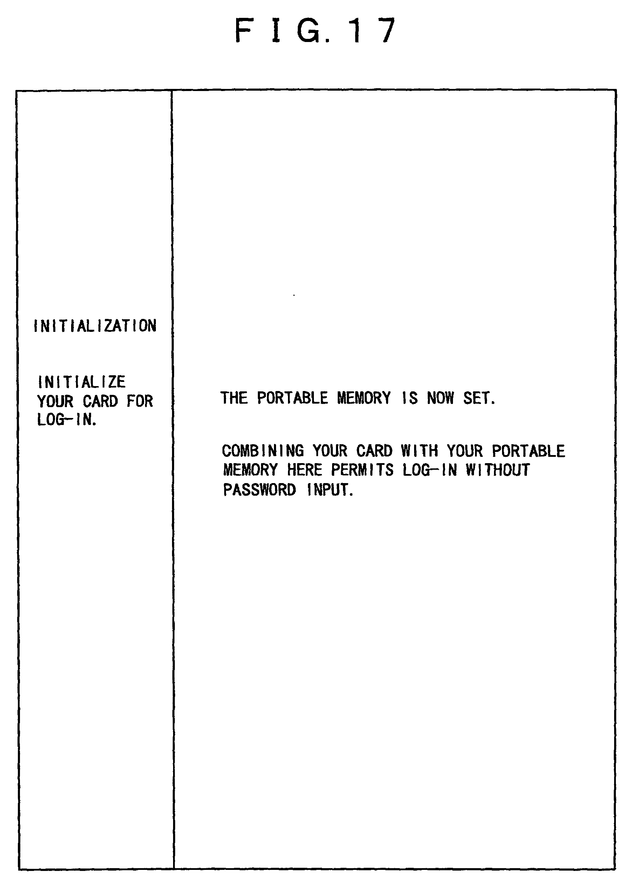

Of the electronic tallies thus generated, the user tally is sent to the terminal 3 and written to the portable memory 11. This causes a portable memory initialization complete screen of Fig. 17 to appear. This screen displays two messages. One message says that initialization of the portable memory has been complete. The other message says that combining the portable memory 11 with the IC card 10 grants automatic log-in, with no need for manual password input.

The automatic log-in system 1 embodying this invention as described above offers the advantages summarized below.

### (1) Authenticating the user with tallies has the following effects.

The authentication information is turned into a server tally and a user tally. If the server tally is leaked following an attack on the server 5, or if the user tally is deemed stolen following the theft of the portable memory 11, the risk of the original authentication information being reconstituted from the lost tallies is virtually nil. The automatic log-in system 1 thus provides a very high degree of security.

The only information held by the IC card 10 and related to the authentication information is the numbers (card ID 25, electronic money ID 26) used for establishing an association with data needed for authentication (i.e., server tally). It follows that even if the IC card 10 is lost, it cannot be abused by an unscrupulous third party.

If the two tallies were stored separately on two portable storage media and if both media fell into the possession of a dishonest third party, the original information could be reconstituted fraudulently by matching the two tallies retrieved from the media. Such an eventuality, however, is inconceivable with the inventive automatic log-in system 1. Since one tally is stored in the server 5 and the other in the portable storage medium (portable memory 11), acquiring the two portable storage media (IC card 10 and portable memory 11) still bars the third party from reconstituting the original information.

### (2) Executing automatic log-in provides the following effects.

There is no need to input the user ID or password manually because the IC card 10 and portable memory 11 used for automatic log-in combine to let the user skip the input.

It is not necessary to remember the user ID or password, which is convenient for the user.

Since there is no need to remember the password, the password can be made quite complicated; it can be a complex combination of upper case letters, lower case letters, and numerals for enhanced security.

### (3) Adopting the noncontact type IC card 10 as the portable storage medium provides the following effects.

The IC card 10 is convenient to use because the user need only hold it to the reader/writer 7.

Since the IC card 10 need not to be brought into physical contact with the reader/writer 7, both the reader/writer 7 and the IC card 10 can remain durable and thus keep their integrity.

If a contact type portable storage medium were adopted (e.g., contact type IC card), there could be problems in outdoor situations. Dust or rainwater could hamper proper contact between the terminal and the storage medium. That eventuality is circumvented by use of the noncontact type IC card 10.

### (First variation)

With the above-described embodiment, the password and card-specific information were shown turned into the user tally and server tally. Alternatively, other resources may be utilized as original data from which to generate electronic tallies.

For example, the user ID, password, card ID 25, electronic money ID 26, and portable memory-specific information may each be used singly or may be employed in combination as the original data.

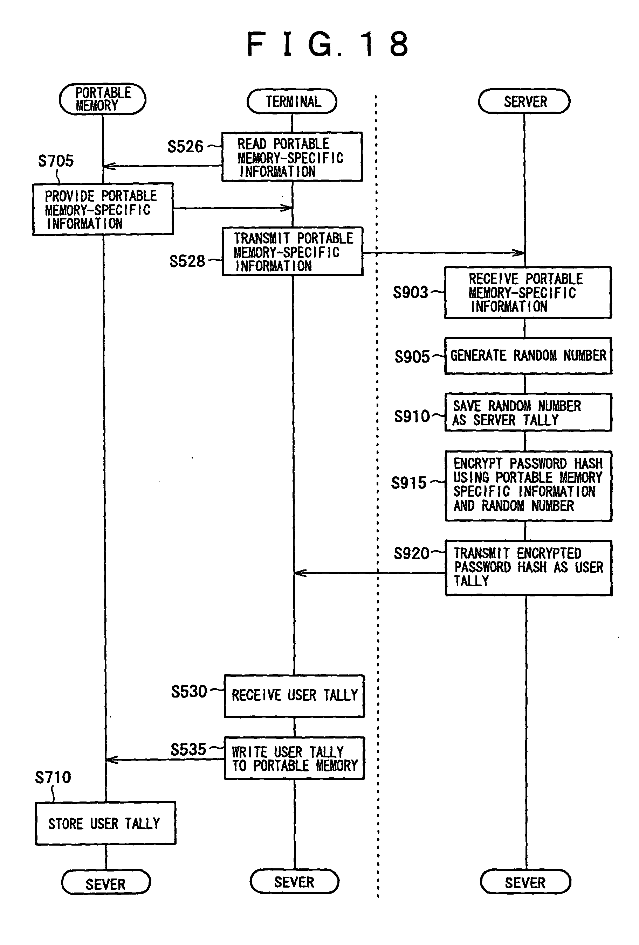

As a first variation of the embodiment, portable memory-specific information is used as the original data from which to derive electronic tallies. How this variation is implemented is described below with reference to the flowchart of Fig. 18.

Of the steps shown in Fig. 18, those also included in Fig. 8 will be given the same step numbers, and only the steps related to handling the portable memory-specific information will be explained.

The terminal 3 operates the portable memory drive 8 to read the portable memory-specific information from the portable memory 11 (step S526).

The portable memory 11 offers its portable memory-specific information to the terminal 3 (step S705).

The terminal 3 sends to the server 5 the portable memory-specific information acquired from the portable memory 11 (step S528). The server 5 receives the portable memory-specific information transmitted from the terminal 3 (step 903) .

In the server 5, the tally generation unit 43 generates a random number (step 905). The value used as a basis for generating random numbers is illustratively time-of-day data, so that generated numbers will be genuinely random.

The random number generated by the tally generation unit 43 is stored as a server tally into the server tally database 20 (step 910).

Using the portable memory-specific information obtained from the terminal 3 and the random number generated in step 905, the tally generation unit 43 encrypts a hash of the password acquired from the user (step 915). The terminal access unit 41 transmits the encrypted password hash to the terminal 3 as a user tally (step 920).

The terminal 3 receives the user tally from the server 5 (step 530). The received user tally is written to the portable memory 11 by the portable memory drive 8 (step 535).

The portable memory keeps the user tally written therein (step 710).

The steps above, when executed as described, generate electronic tallies using the portable memory-specific information. When the portable memory-specific information is included into the electronic tallies, it is possible to makes arrangements so as to nullify the user tally placed in the portable memory 11 if that tally is copied into another portable memory 11.

The arrangements above illustratively involve having the terminal 3 transmit the portable memory-specific information at the time of automatic log-in, so that the transmitted information may be checked against the portable memory-specific information reconstituted from the electronic tallies.

### (Second variation)

A second variation of the embodiment above requires the user to input a password manually. With the second variation in use, the user manually enters the password while setting the IC card 10 to the terminal 3 at the same time.

For this variation, the card-specific information is also associated with the corresponding user ID in the server 5. When the password is manually input and transmitted by the user, with the card-specific information sent from the IC card 10, this variation can authenticate the user using both the password and the user ID.

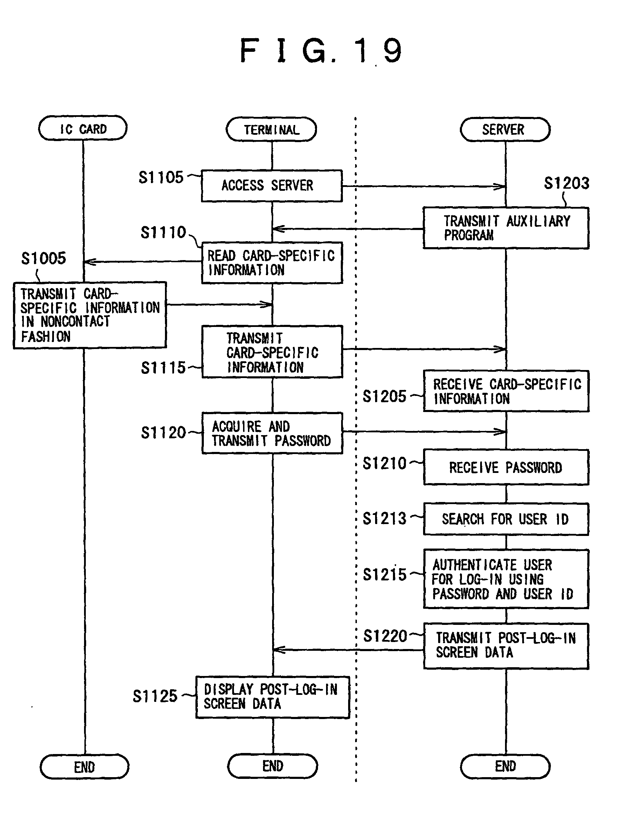

How the second variation of this invention is implemented is described below with reference to Fig. 19.

The terminal 3 first accesses the server 5 (step 1105). If the auxiliary program is found yet to be installed in the terminal 3, the server 5 transmits the auxiliary program to the terminal 3 (step 1203).

Assisted by the auxiliary program, the terminal 3 starts reading the card-specific information from the IC card 10 (step 1110). The IC card 10 sends its card-specific information to the terminal 3 in noncontact fashion (step 1005). The terminal 3 sends to the server 5 the card-specific information received from the IC card 10 (step 1115).

The server 5 receives the card-specific information from the terminal 3 (step 1205).

The terminal 3 acquires the password entered by the user and transmits the input password to the server 5 (step 1120). The server 5 receives the password from the terminal 3 (step 1210).

The server 5 searches for the user ID associated with the card-specific information received from the terminal 3 (step 1213).

The server 5 then performs log-in authentication using the retrieved user ID and the password received from the terminal 3, before carrying out the log-in process (step 1215).

After the log-in process, the server 5 transmits post-log-in screen data to the terminal 3 (step 1220).

The terminal 3 receives the post-log-in screen data and causes the display unit 67 to display the post-log-in screen accordingly (step 1125).

### (Applications)

It is possible to provide other services by putting the automatic log-in system 1 of this embodiment illustratively to the following applications.

### (1) Sharing of personal information

Utilizing the portable memory 11 makes it possible to share personal information between devices (e.g., personal computers, CE equipment). More specifically, using the portable memory 11 permits sharing of e-mail text, address book entries, schedules, bookmarks, and personal profiles.

"CE" stands for consumer electronics, and the CE equipment includes household AV appliances such as TV sets and video cassette recorders, as well as other home electrical products.

Where the portable memory 11 is assigned URL information as the original information from which to derive tallies, getting the portable memory 11 recognized by the PC and holding the IC card 10 to the reader/writer can initial access to a desired web page.

Where the tally-based authentication system is installed, private data can be accessed only if the user tally and the server tally match. This setup ensures confidentiality of private information.

### (2) Use of storage media other than the IC card 10 and portable memory 11

The IC card 10 and portable memory 11 may be replaced by or supplemented with another portable storage medium (e.g., memory in the mobile phone) and/or a fixed storage medium (e.g., hard disc in the PC) depending on the purpose. Such selective uses of the available storage media further contribute to the convenience of users.

### (3) Application to CE equipment

With this embodiment of the invention, the terminal 3 was shown implemented illustratively by use of a personal computer. In another application, the automatic log-in system 1 is particularly effective when used in conjunction with CE equipment (e.g., digital camera, TV set). Since the CE equipment has a poorly developed interface, an authentication technique involving a user tally 111 should be effective when applied to the CE equipment.

### (4) Application to membership cards

The IC card 10 may be used as a membership card. In this case, password-based authentication is not performed. Instead, the server checks to see whether the card-specific information in the IC card 10 is associated with a user ID previously stored in the server as a token of membership. The duly associated card-specific information proves that the owner of the IC card 10 is a legitimate member.

Although one embodiment of the invention and its variations were described above, they are only examples and are not limitative of this invention. Other modifications and alternatives may also be implemented without departing from the spirit or scope of the invention.

For example, whereas the automatic log-in system 1 above was shown utilizing the IC card 10 and portable memory 11, this does not mean the portable storage media are limited to the IC card 10 and portable memory 11. Alternatively, a flexible disc, a magneto-optical disc, and other manually transportable storage media may be adopted.

Although the terminal 3 was shown practiced using a personal computer furnished with a browser, this is not limitative of the invention. Alternatively, a digital TV set or any other suitable household data apparatus may be used provided it can be connected to a network.

The server 5 may be supplemented with the function of dissociating a given user ID from the corresponding' card-specific information.

It should be possible for the inventive system to issue electronic tallies repeatedly so that each user's password may be altered as needed.

This invention may also be practiced alternatively in the constitution (1) or (2) below.

(1) As another variation of the invention, there may be provided an authentication processing terminal comprising: user registering means for registering a user identification number for identifying a user and a password; secret number registering means for registering secret identification information (card ID 25) to be associated with a server tally which is one of generated tallies and which is to be retained by a server (server 5); tally receiving means for receiving from the server a user tally which is another one of the generated tallies and which is to be kept by the user; and recording means for recording the user tally received by the tally receiving means to a storage medium (portable memory 11); wherein the tallies are generated from the password.

Alternatively, the tallies may be generated from both the password and the secret identification number.

As another alternative, the inventive authentication processing terminal may further comprise medium registering means for registering identification information about the storage medium to which the user tally is recorded, the medium identification information proving that the user tally is recorded in the storage medium registered by the storage registering means.

(2) As yet another variation of the invention, there may be provided an information processing apparatus for acquiring authentication information based on a user tally and a server tally derived from a password corresponding to an identification number owned by a user and from secret identification information (card ID 25) stored in a storage medium (IC card 10), the user tally and the server tally being stored in another storage medium (portable memory 11) and a server (server 5) respectively. The information processing apparatus comprises: tally transmitting means for transmitting the user tally retrieved from the storage medium to the server; and secret number transmitting means for transmitting the secret identification information retrieved from the storage medium to the server. The authentication information is reconstituted from the server tally stored in the server and from the tally transmitted by the tally transmitting means.

With the above structure, at least part of the authentication information is divided into two tallies, one tally getting stored into the server and the other into an external storage medium. Taken separately, the tally data are totally meaningless. At the time of authentication, the external storage medium containing one tally is used in combination with a noncontact type IC card that has a number associated with the other tally held in the server. This arrangement makes it possible to execute automatic log-in without resorting to manual ID/password input. In that respect, the inventive system offers the user both security and convenience. Since the number held by the noncontact type IC card is kept secret, the degree of security is enhanced further.

In carrying out the invention, as described, there is provided an authentication system comprising a terminal and an authentication server. The terminal acquires identification information for identifying first tally information from a first portable storage medium and second tally information from a second portable storage medium. The authentication server acquires the identification information and the second tally information from the terminal in order to perform an authentication process. Upon logging in to a service site, the terminal transmits the acquired identification information and second tally information to the authentication server. The authentication server searches for the first tally information using the identification information received from the terminal, and acquires authentication information using the retrieved first tally information and the second tally information acquired from the terminal. In the event of successful user authentication based on the acquired authentication information, the authentication server performs a log-in process to permit access to the service site.

In carrying out the invention, there is also provided an authentication server connected to a terminal which acquires identification information for identifying first tally information from a first portable storage medium and second tally information from a second portable storage medium. The authentication server acquires the identification information and the second tally information from the terminal in order to perform an authentication process. The authentication server comprises: identification information acquiring means for acquiring the identification information from the terminal; first tally information searching means for searching for the first tally information using the acquired identification information; second tally information acquiring means for acquiring the second tally information from the terminal; authentication information acquiring means for acquiring authentication information using the retrieved first tally information and the acquired second tally information; and authenticating means for carrying out the authentication process using the acquired authentication information (authentication server of the first constitution).

Preferably, the authentication server above may further comprise another authenticating means for performing the log-in process to grant the terminal access to the service site in the event of successful user authentication by the authenticating means.

The first tally information and the second tally information handled by the authentication server above may be two electronic tallies generated by dividing, using suitable logic, original data constituted at least by part of the authentication information in such a manner that either one of the electronic tallies is insufficient to reconstitute the original data.

If such electronic tallies are used, the authentication information acquiring means above may be arranged to reconstitute the original data using the first tally information and the second tally information.

Preferably, the authentication server of the first constitution above may further comprise: registration information acquiring means for acquiring registration information including authentication information from the terminal; tally information generating means for generating the first and the second tally information in such a manner that the authentication information included in the acquired registration information will be identified using the first and the second tally information; associating means for acquiring from the terminal identification information with which to search for the generated first tally information so as to associate the first tally information with the acquired identification information; storing means for storing the associated first tally information; and second tally information transmitting means for transmitting the generated second tally information to the terminal; whereby the user desirous of automatic log-in may be registered.

The tally information generating means above may be arranged to generate the first and the second tally information by dividing, using suitable logic, original data constituted at least by part of the authentication information included in the acquired registration information in such a manner that either one of the first and the second tally information is insufficient to reconstitute the original data.

In carrying out the invention, there is also provided an authentication server connected to a terminal which acquires identification information for identifying first tally information from a first portable storage medium and second tally information from a second portable storage medium. The authentication server acquires the identification information and the second tally information from the terminal in order to perform an authentication process. The authentication server comprises: registration information acquiring means for acquiring registration information including authentication information from the terminal; tally information generating means for generating the first and the second tally information in such a manner that the authentication information included in the acquired registration information will be identified using the first and the second tally information; associating means for acquiring from the terminal identification information with which to search for the generated first tally information so as to associate the first tally information with the acquired identification information; storing means for storing the associated first tally information; and second tally information transmitting means for transmitting the generated second tally information to the terminal (authentication server of the second constitution).

The tally information generating means above may be arranged to generate the first and the second tally information by dividing, using suitable logic, original data constituted at least by part of the authentication information included in the acquired registration information in such a manner that either one of the first and the second tally information is insufficient to reconstitute the original data.

In carrying out the invention, there is also provided a terminal for transmitting identification information for identifying first tally information and second tally information to the authentication server of the first constitution (terminal of the first constitution).

The terminal above may further comprise: identification information transmitting means for acquiring the identification information from a first portable storage medium which stores the identification information, in order to transmit the acquired identification information to the authentication server; and second tally information transmitting means for acquiring the second tally information from a second portable storage medium so as to transmit the acquired second tally information to the authentication server.

For the terminal of the first constitution, at least either one of the first and the second portable storage media may be a noncontact type or contact type IC card.

At least part of the identification information above may be stored in secret in the IC card.

In carrying out the invention, there is also provided a terminal for transmitting registration information and identification information to the authentication server of the second constitution (terminal of the second constitution).

The terminal above may preferably comprise: registration information transmitting means for acquiring authentication information so as to transmit registration information including the acquired authentication information to the authentication server; identification information transmitting means for acquiring the identification information from a first portable storage medium in order to transmit the acquired identification information to the authentication server; and second tally information storing means for receiving the second tally information from the authentication server so as to store the received second tally information into a second portable storage medium.

At least either one of the first and the second portable storage media may be a noncontact type or contact type IC card.

In carrying out the invention, there is also provided a portable storage medium for use with the terminal of the first constitution, the portable storage medium accommodating second tally information in a manner readable by the terminal.

In carrying out the invention, there is also provided an authenticating method for use with a terminal which acquires identification information for identifying first tally information from a first portable storage medium and second tally information from a second portable storage medium. The authenticating method comprises the step of acquiring the identification information and the second tally information from the terminal in order to perform an authentication process.

The authenticating method above may be used in conjunction with a computer comprising identification information acquiring means, first tally information searching means, second tally information acquiring means, an authentication information acquiring means, and authenticating means. The authenticating method causes the computer to execute the steps of: causing the identification information acquiring means to acquire the identification information from the terminal; causing the first tally information searching means to search for the first tally information using the acquired identification information; causing the second tally information acquiring means to acquire the second tally information from the terminal; causing the authentication information acquiring means to acquire authentication information using the retrieved first tally information and the acquired second tally information; and causing the authenticating means to perform the authentication process using the acquired authentication information (first authenticating method).

The authenticating method above may further comprise the step of causing the authenticating means of the computer above to perform a log-in process allowing the terminal to log in to a desired site provided the authenticating process has been successfully completed.

For the first authenticating method above, the first and the second tally information may be formed by two electronic tallies generated by dividing, using suitable logic, original data constituted at least by part of the authentication information in such a manner that either one of the first and the second tally information is insufficient to reconstitute the original data.

If such electronic tallies are used, the authentication information acquiring step above may be arranged to reconstitute the original data using the first and the second tally information.

Preferably, the first authenticating method may be used in conjunction with a computer comprising registration information acquiring means, tally information generating means, associating means, storing means, and second tally information transmitting means. The first authenticating method causes the computer to execute the steps of: causing the registration information acquiring means to acquire registration information including authentication information from the terminal; causing the tally information generating means to generate the first and the second tally information in such a manner that the authentication information included in the acquired registration information will be identified using the first and the second tally information; causing the associating means to acquire from the terminal identification information with which to search for the generated first tally information so as to associate the first tally information with the acquired identification information; causing the storing means to store the associated first tally information; and causing the second tally information transmitting means to transmit the generated second tally information to the terminal.

The tally information generating step above may be arranged to generate the first and the second tally information by dividing, using suitable logic, original data constituted at least by part of the authentication information included in the acquired registration information in such a manner that either one of the first and the second tally information is insufficient to reconstitute the original data.

In carrying out the invention, there is also provided an authentication information registering method used in conjunction with an authenticating method for use with a terminal which acquires identification information for identifying first tally information from a first portable storage medium and second tally information from a second portable storage medium. The authenticating method comprises the step of acquiring the identification information and the second tally information from the terminal in order to perform an authentication process. The authentication information registering method is used by a computer which comprises registration information acquiring means, a tally information generating means, associating means, storing means, and second tally information transmitting means. The authentication information registering method causes the computer to execute the steps of: causing the registration information acquiring means to acquire registration information including authentication information from the terminal; causing the tally information generating means to generate the first and the second tally information in such a manner that the authentication information included in the acquired registration information will be identified using the first and the second tally information; causing the associating means to acquire from the terminal identification information with which to search for the generated first tally information so as to associate the first tally information with the acquired identification information; causing the storing means to store the associated first tally information; and causing the second tally information transmitting means to transmit the generated second tally information to the terminal (first authentication information registering method).

The tally information generating step above may be arranged to generate the first and the second tally information by dividing, using suitable logic, original data constituted at least by part of the authentication information included in the acquired registration information in such a manner that either one of the first and the second tally information is insufficient to reconstitute the original data.

In carrying out the invention, there is also provided an information transmitting method for use with a terminal for transmitting identification information for identifying first tally information and second tally information to the authentication server of the first constitution. The terminal comprises identification information transmitting means and second tally information transmitting means. The information transmitting method causes the terminal to execute the steps of: causing the identification information transmitting means to acquire the identification information from a first portable storage medium which stores the identification information, in order to transmit the acquired identification information to the authentication server; and causing the second tally information transmitting means to acquire the second tally information from a second portable storage medium so as to transmit the acquired second tally information to the authentication server (first information transmitting method).

For the information transmitting method above, at least either one of the first and the second portable storage media may be a noncontact type or contact type IC card.

Where such an IC card is utilized, at least part of the identification information above may be stored in secret in the IC card.

In carrying out the invention, there is also provided an information transmitting and receiving method for use with a terminal which transmits registration information and identification information to the authentication server of the second constitution.

The information transmitting receiving method, used in conjunction with the terminal comprising registration information transmitting means, identification information transmitting means, and second tally information storing means, may preferably cause the terminal to execute the steps of: causing the registration information transmitting means to acquire authentication information so as to transmit the registration information including the acquired authentication information to the authentication server; causing the identification information transmitting means to acquire the identification information from a first portable storage medium in order to transmit the acquired identification information to the authentication server; and causing the second tally information storing means to receive the second tally information from the authentication server so as to store the received second tally information into a second portable storage medium.

At least either one of the first and the second portable storage media may be a noncontact type or contact type IC card.

In carrying out the invention, there is also provided an authenticating program for use with a computer connected to a terminal which acquires identification information for identifying first tally information from a first portable storage medium and second tally information from a second portable storage medium. The computer acquires the identification information and the second tally information from the terminal in order to perform an authentication process. The authenticating program causes the computer to implement functions comprising: an identification information acquiring function of acquiring the identification information from the terminal; a first tally information searching function of searching for the first tally information using the acquired identification information; a second tally information acquiring function of acquiring the second tally information from the terminal; an authentication information acquiring function of acquiring authentication information using the retrieved first tally information and the acquired second tally information; and an authenticating function of carrying out the authentication process using the acquired authentication information (authenticating program of the first constitution).

In carrying out the invention, there is also provided an authenticating program for use with a computer connected to a terminal which acquires identification information for identifying first tally information from a first portable storage medium and second tally information from a second portable storage medium. The computer acquires the identification information and the second tally information from the terminal in order to perform an authentication process.

The authenticating program above causes the computer to implement functions comprising: a registration information acquiring function of acquiring registration information including authentication information from the terminal; a tally information generating function of generating the first and the second tally information in such a manner that the authentication information included in the acquired registration information will be identified using the first and the second tally information; an associating function of acquiring from the terminal identification information with which to search for the generated first tally information so as to associate the first tally information with the acquired identification information; a storing function of storing the associated first tally information; and a second tally information transmitting function of transmitting the generated second tally information to the terminal (authenticating program of the second constitution).

In carrying out the invention, there is also provided an information transmitting program for use with a computer connected to a terminal which transmits identification information for identifying first tally information and second tally information to the authentication server of the first constitution. The information transmitting program causes the computer to implement functions comprising: an identification information transmitting function of acquiring the identification information from a first portable storage medium which stores the identification information in order to transmit the acquired identification information to the authentication server; and a second tally information transmitting function of acquiring the second tally information from a second portable storage medium so as to transmit the acquired second tally information to the authentication server.

In carrying out the invention, there is also provided an information transmitting and receiving program for use with a computer connected to a terminal which transmits registration information and identification information to the authentication server of the second constitution. The information transmitting and receiving program causes the computer to implement functions comprising: a registration information transmitting function of acquiring authentication information so as to transmit the registration information including the acquired authentication information to the authentication server; an identification information transmitting function of acquiring the identification information from a first portable storage medium in order to transmit the acquired identification information to the authentication server; and a second tally information storing function of receiving second tally information from the authentication server so as to store the received second tally information into a second portable storage medium.

In carrying out the invention, there is also provided a storage medium which stores the authenticating program of the first constitution in a manner readable by a computer.

In carrying out the invention, there is also provided a storage medium which stores the authenticating program of the second constitution in a manner readable by a computer.

In carrying out the invention, there is also provided a storage medium which stores the information transmitting program in a manner readable by a computer.

In carrying out the invention, there is also provided a storage medium which stores the information transmitting and receiving program in a manner readable by a computer.

In carrying out the invention, there is also provided an information processing apparatus for performing an authentication process based on identification information which is stored in a first storage medium and which identifies first tally information stored in a server and on second tally information stored in a second storage medium. The information processing apparatus comprises: storing means for storing the identification information and the first tally information while associating the two kinds of information; receiving means for receiving the identification information retrieved from the first storage medium and the second tally information from the second storage medium; searching means for searching the storing means for the first tally information associated with the identification information received by the receiving means; and authentication information acquiring means for acquiring authentication information using the first tally information retrieved by the searching means and the second tally information received by the receiving means (information processing apparatus of the first constitution).

For the information processing apparatus of the first constitution, the identification information may preferably be a storage medium identification number for identifying the first storage medium.

For the information processing apparatus of the first constitution, the identification information may alternatively be a user identification number for identifying the authentication-requesting user.

For the information processing apparatus of the first constitution, the first storage medium may be a noncontact type or contact type card. This card may be formed by an IC card.

The information processing apparatus of the first constitution may further comprise authenticating means for carrying out the authentication process based on the authentication information acquired by the authentication information acquiring means.

In carrying out the invention, there is also provided an information processing method for performing an authentication process based on identification information which is stored in a first storage medium and which identifies first tally information stored in a server and on second tally information stored in a second storage medium. The information processing method is used in conjunction with a computer which comprises storing means, receiving means, searching means, and authentication information acquiring means. The information processing method comprises the steps of: causing the storing means to store the identification information and the first tally information while associating the two kinds of information; causing the receiving means to receive the identification information retrieved from the first storage medium and the second tally information from the second storage medium; causing the searching means to search the storing means for the first tally information associated with the identification information received by the receiving means; and causing the authentication information acquiring means to acquire authentication information using the first tally information retrieved by the searching means and the second tally information received by the receiving means.

In carrying out the invention, there is also provided an information processing apparatus for performing an authentication process based on identification information which is stored in a first storage medium and which identifies first tally information stored in a server and on second tally information stored in a second storage medium. The information processing apparatus comprises: storing means for storing the identification information and the first tally information while associating the two kinds of information; receiving means for receiving either the identification information from the first storage medium or the second tally information; searching means for searching the storing means for the first tally information associated with the identification information received by the receiving means; and authentication information acquiring means for acquiring authentication information based on the first tally information retrieved by the searching means and on the second tally information (information processing apparatus of the second constitution).

### (Second embodiment)

A second preferred embodiment of this invention will now be described in detail with reference to the accompanying drawings.

### (1) Outline of the second embodiment

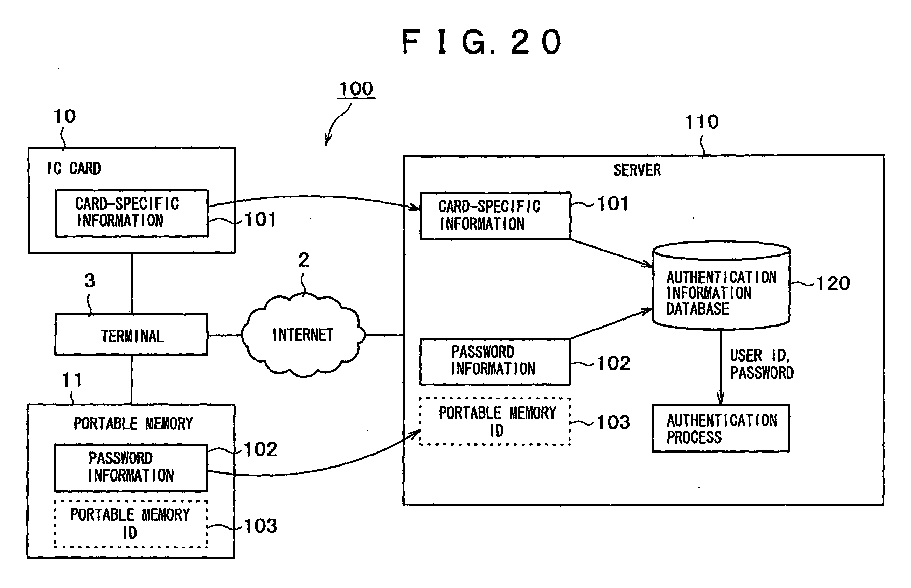

Fig. 20 is a conceptual view outlining an automatic log-in system practiced as the second embodiment of this invention. When performing an automatic log-in process, the automatic log-in system 100 allows a user to request authentication using card-specific information 101 held in the IC card 10 and password information 102 kept in the portable memory 11.

A server 110 performs a user authentication process by acquiring a user ID and a password from the card-specific information 101 and password information 102 respectively. In this case, the card-specific information 101 and password information 102 constitute authentication request information, and the user ID and the password make up authentication information.

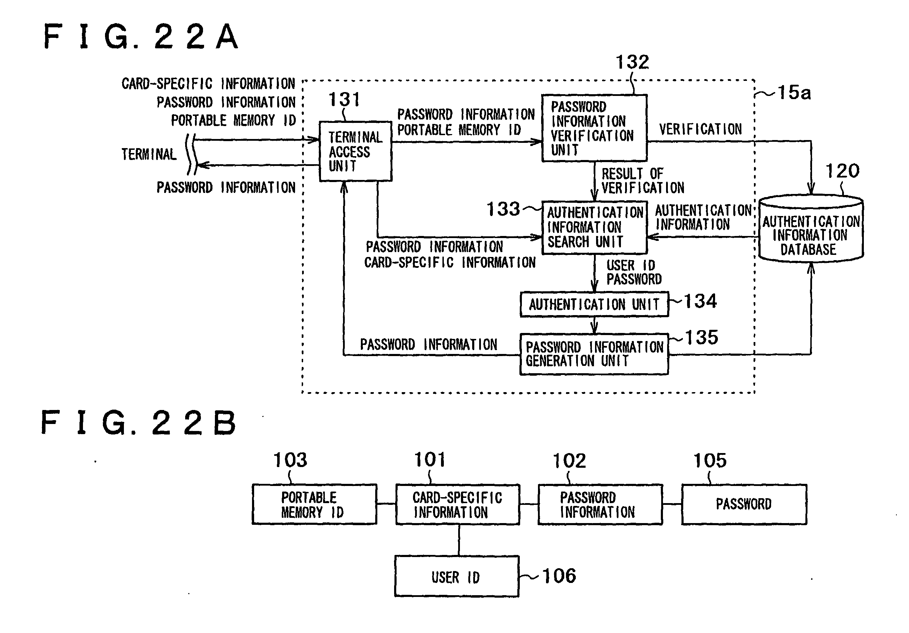

The server 110 comprises an authentication information database 120 that is searched for authentication information stored therein. The authentication information database 120 has a logical structure shown in Fig. 22B. In this structure, the card-specific information 101 is associated with a portable memory ID 103, password information 102, and a user ID 106. The password information 102 is further associated with a password 105.

When requesting the server 110 for authentication, the user sets the IC card 10 and portable memory 11 to the terminal 3 to have the card-specific information 101, password information 102 and portable memory ID 103 transmitted from the storage media to the server 110.

The server 110 receives the transmitted information and ID, and checks to see whether the received password information 102 and portable memory ID 103 are found associated with each other in the authentication information database 120. The sever 110 also verifies that the password information has been retrieved from the portable memory registered in the authentication information database 120.

By resorting to the authentication information database 120, the server 110 then acquires the password 105 from the combination of the password information 102 and card-specific information 101, and obtains the user ID 106 from the card-specific information 101.

When the user ID 106 is derived from the combination of the password information 102 and card-specific information 101 as described, the server 110 can ascertain that the IC card 10 used by the user was registered previously in the authentication information database 120. The server 110 can also verify that the combination of the IC card 10 and portable memory 11 coincides with that which was registered beforehand in the authentication information database 120.

Although the second embodiment above was shown acquiring the password 105 from the combination of the password 102 and card-specific information 101 received, this is not limitative of the invention. Alternatively, the password 105 may be derived from the password information 102.

The server 110 carries out the user authentication process based on the user ID 106 and password 105 thus acquired.

If the user is successfully authenticated, the server 110 allows the user to log in. If the user authentication is unsuccessful, the server 110 denies log-in to the user.

The password information 102 is information that is associated with the password 105. As such, the password information 102 constitutes a so-called one-time password, i.e., a password generated for each authentication pass and discarded once it is used.

After the user authentication process, the server 110 generates new password information 102 and sends it to the terminal 3. The terminal 3 receives the password information 102 and writes it to the portable memory 11.

The password information 102 written to the portable memory 11 this time will be used in the next user authentication process.

### (2) Details of the second embodiment

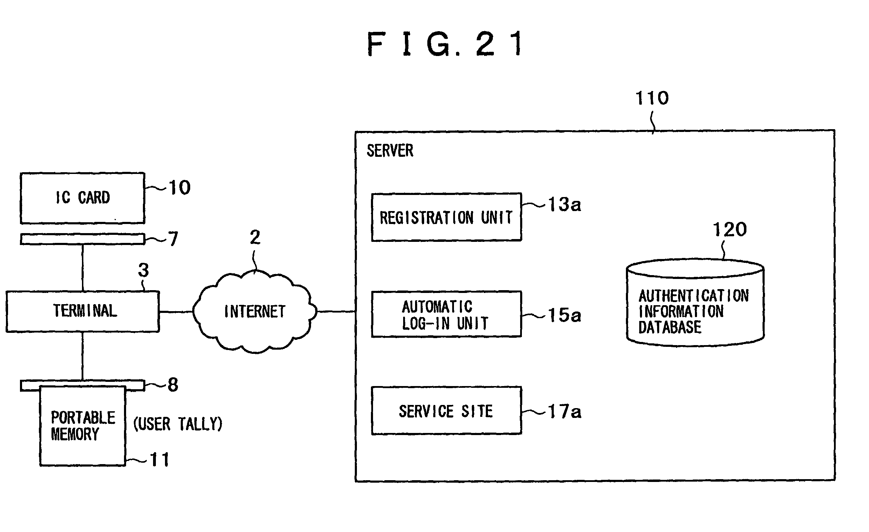

Fig. 21 is a schematic view depicting a typical network configuration of the automatic log-in system 100 practiced as the second embodiment of this invention.

The network configuration of the automatic log-in system 100 is the same as that of the automatic log-in system 1 described earlier. The system 100 comprises a server 110 in which a service site is established, a terminal 3 that makes use of the service site, and that part of the Internet 2 which connects the terminal 3 with the server 110.

In the description that follows, those components of the second embodiment which have their identical counterparts in the initially discussed embodiment will be designated by like reference numerals, and the descriptions of the components will be simplified or omitted where redundant.

The terminal 3, reader/writer 7, portable memory drive 8, and IC card 10 are structurally the same as those in the embodiment described earlier.

The terminal 3 writes and reads data to and from the IC card 10 through the reader/writer 7 in noncontact fashion. The terminal 3 also writes and reads data to and from the portable memory 11 by getting the portable memory drive 8 to drive the portable memory 11 loaded therein.

The IC card 10 (Fig. 20) holds card-specific information 101, or information specific to this IC card 10 (i.e., information for allowing this IC card to be distinguished from other IC cards).

A card ID, an electronic money ID given to an electronic money function of the IC card 10, or some other suitable ID information may each be used singly, or they may be employed in an appropriate combination (e.g., card ID and electronic money ID) as the card-specific information 101.

Although not shown, the IC card 10 may further accommodate other card information. That information may be verified by the server 110 in combination with the card-specific information 101 so as to further enhance the level of security.

The IC card 10 constitutes the first storage medium. The card-specific information 101 forms the first identification information for identifying the first storage medium.

The portable memory 11 holds the password information 102 and portable memory ID 103. The password information 102 is issued by the server 110, and the portable memory ID 103 is ID information specific to this portable memory 11 (Fig. 20).

A plurality of pieces of password information 102 may preferably be stored for use in a plurality of setups, as will be discussed later.

The portable memory 11 constitutes the second storage medium. The password information 102 makes up tally information associated with authentication information. The portable memory ID 103 forms the second identification information for identifying the second storage medium.

The terminal 3 reads the card-specific information 101 from the IC card 10 and the password information 102 and portable memory ID 103 from the portable memory 11, when the IC card 10 and the portable memory 11 are set in the reader/writer 7 (Fig. 21) and the portable memory drive 8 respectively. The information and the ID thus retrieved are transmitted from the terminal 3 to the server 110.

The portable memory ID 103 is needed to ascertain that the portable memory 11 is registered in the server 110 as a rightful property of this user. A request for user authentication is made through the use of the card-specific information 101 and password information 102.

In this manner, the user can request user authentication by simply setting the IC card 10 and portable memory 11 in the terminal 3. The user is thus able to log in to the server 110 without entering a user ID or a password through an input screen.

The server 110 comprises functional units such as a registration unit 13a, an automatic log-in unit 15a and a service site 17a, as well as databases including an authentication information database 120.

The server 110 can act as an authentication server that performs a user authentication process. Whereas the second embodiment of the invention lets the server 110 carry out the user authentication process and offer services to the user, it is also possible to construct a system comprising two separate servers, i.e., an authentication server for carrying out the authentication process, and a service server for providing the user with services. In this setup, the service server offers services only to the user who has been authenticated by the authentication server.

The automatic log-in unit 15a performs the authentication process using the card-specific information 101 and password information 102 sent from the terminal 3. When the user is successfully authenticated, the automatic log-in unit 15a allows the user to log in.

As will be discussed later in more detail, the automatic log-in unit 15a searches the authentication information database 120 for a user ID and a password by use of the card-specific information 101 and password information 102. The authentication information retrieved by the search is used to authenticate the user.

The registration unit 13a allows a new user to register for the use of the service site 17a. The automatic log-in unit 15a performs a user authentication process on each user who has been registered anew by the registration unit 13a.

The authentication information database 120 is a database that stores information through which to search for authentication information, as well as user information such as users' personal information. The authentication information database 120 will be discussed later in more detail.

Fig. 22A is a block diagram schematically indicating a functional structure of the automatic log-in unit 15a.

The automatic log-in unit 15a comprises a terminal access unit 131, a password information verification unit 132, an authentication information search unit 133, an authentication unit 134, and a password information generation unit 135.

The terminal access unit 131 exchanges data with the terminal 3.

More specifically, the terminal access unit 131 transmits log-in screen data to the accessing terminal 3; receives the card-specific information 101, password information 102, and portable memory ID 103 sent from the terminal 3 in response to the log-in screen data; and sends password information generated by the password information generation unit 135 to the terminal 3.

The terminal access unit 131 constitutes the medium information receiving means of this embodiment.

Preferably, the terminal access unit 131 may be arranged to verify whether the card-specific information 101, password information 102, and portable memory ID 103 are sent from the same terminal 3.

In this case, the automatic log-in unit 15a may be further arranged to deny authentication if these items of information are found to have been sent separately from different terminals 3. This provides an additional measure of security.

The password information verification unit 132 receives the password information 102 and portable memory ID 103 from the terminal access unit 131, and checks to determine whether the password information 102 has been retrieved from the portable memory 11 registered in the authentication information database 120 as the user' s legitimate property. The check prevents the password information 102 from getting copied from the portable memory 11 to another portable memory for fraudulent uses. This also provides an added measure of security.

The password information verification unit 132 may acquire the card-specific information 101 from the terminal access unit 131 to determine whether the IC card 10 handled by the user is duly registered in the authentication information database 120 as the user' s property. The password information verification unit 132 may also verify whether the combination of the portable memory ID 103 and card-specific information 101 or the combination of the password information 102 and portable memory ID 103 is the same as the combination registered using the password information 102.

With the second embodiment, these verifications are carried out by the authentication information search unit 133 in parallel with the search for authentication information.

A typical structure of the authentication information database 120 is described below.

Fig. 22B is a schematic view illustrating logical relations between those items of user authentication information which are stored in the authentication information database 120.

The authentication information database 120 stores, regarding each user, the card-specific information 101, password information 102, portable memory ID 103, password 105, and user ID 106 which are associated with one another.

As illustrated, the card-specific information 101 is associated with the password information 102, portable memory ID 103, and user ID 106. The password information 102 is further associated with the password 105.

The server 110 may register beforehand the combination of the IC card 10 and portable memory 11 for use by the user, by having the card-specific information 101 and portable memory ID 103 stored in the authentication information database 120 in association with each other.

With these associative relations in place, the user ID 106 and password 105 are identified using the card-specific information 101 and password 102 respectively. The user authentication process is carried out using the user ID 106 and password 105 thus identified.

In the case above, the user ID 106 constitutes first authentication information associated with the first identification information (i.e., card-specific information 101), and the password 105 makes up second authentication information associated with the tally information (password information 102).

The password information 102 is used as a one-time password. That is, a new password is generated for every authentication process carried out anew.

Discarding the password information 102 once it is used in a given authentication process provides an added measure of security. Even if the portable memory 11 is fraudulently obtained by a third party, the third party is unable to know the password 105.

The associative relations shown in Fig. 22B are not limitative of how the card-specific information 101, password information 102, portable memory ID 103, password 105, and user ID 106 are to be related to one another. Other suitable relations may be established and utilized provide they allow any one item of information to serve as a pointer pointing to another item of information.

The card-specific information 101 need not be associated with the password information 102. The user authentication process can still be carried out if the user ID 106 is derived from the card-specific information 101 and the password 105 from the password information 102.

Although not shown, the authentication information database 120 further accommodates users' personal information (e.g., each user's name, age, gender, address, workplace, and hobby).

Returning to Fig. 22A, the password information verification unit 132 searches the authentication information database 120 for the password information 102 and portable memory ID 103 received from the terminal access unit 131, in order to check whether the same password information 102 and portable memory ID 103 associated with each other are registered in the database 120 (in the case of the authentication information database 120, the password information 102 is associated with the portable ID 103 by way of the card-specific information 101).

The result of the check above is forwarded to the authentication information search unit 133.

The authentication information search unit 133 receives the result of the check from the password information verification unit 132.

If the result of the check verifies that the combination of the password information 102 and portable memory ID 103 is registered in the authentication information database 120, then the password information verification unit 132 searches for authentication information. If the result of the check fails to verify that the password information 102 and portable memory ID 103 are registered in the authentication information database 120 in combination, then the automatic log-in unit 15a terminates the authentication process without searching for the authentication information.

If the password information verification unit 132 checks whether the IC card 10 or the combination of the IC card 10 and portable memory 11 is registered and if the unit 132 successfully verifies the registration, then the authentication information search unit 133 searches for authentication information. If the check above fails to verify the registration, the automatic log-in unit 15a terminates the authentication process.

When searching for authentication information, the authentication information search unit 133 acquires the card-specific information 101 and password information 102 from the terminal access unit 131. Using the combination of the acquired information, the authentication information search unit 133 searches the authentication information database 120 for the user ID 106 and password 105. The user ID 106 and password 105, when retrieved by the search, are forwarded to the authentication unit 134.

If the combination of the card-specific information and password information is not found in the combinations of information registered in the authentication information database 120, no search is made for authentication information.

For example, if the password turns out to be the password information 102 but the card-specific information combined with the information 102 is different from the legitimate card-specific information 101, then the search for the password 105 will not be carried out.

As described, where a search is made for the password 105 and user ID 106 using the combination of the card-specific information 101 and password information 102, a check can be made to determine whether the IC card 10 and portable memory 11 utilized by the user are duly registered in the authentication information database 120. A check can also be made to determine whether the IC card used by the user is the legitimate IC card 10.

The authentication unit 134 acquires the authentication information (user ID 106 and password 105) from the authentication information search unit 133 and uses the acquired information to authenticate the user.

Although not shown, the server 110 has a database that stores a user ID and a password in combination associated with each user for use in authentication processes. The authentication unit 134 performs the authentication process by checking the user ID 106 and password 105 retrieved by the authentication information search unit 133 against the user ID' s and passwords held in the database.

When the user is successfully authenticated, the authentication unit 134 allows the user to log in to the service site. If the user is not authenticated, the authentication unit 134 denies log-in and sends an error message to the terminal 3.

When the authentication unit 134 has finished user authentication, the password information generation unit 135 generates new password information 102 and sends it to the terminal 3 via the terminal access unit 131. At the same time, the password information generation unit 135 substitutes the new password information 102 for the once-used password information 102 held in the authentication information database 120.

The automatic log-in unit 15a accepts a user authentication request for the next user authentication process using the new password information 102.

As described, the password information generation unit 135 and terminal access unit 131 constitute the tally information transmitting means that generates tally information (password information 102) and sends the generated information to the terminal 3.

The password information generation unit 135 further constitutes the storing means for storing the generated tally information into the authentication information database 120 (storage unit).

Upon receipt of the new password information 102 from the server 110, the terminal 3 replaces the currently stored password information 102 (used for the current user authentication request) in the portable memory 11 with the new password information 102. Next time the user requests authentication, the newly issued password information 102 will be used.

As described, the terminal 3 comprises: the medium information transmitting means for transmitting the card-specific information 101 and password information 102 to the terminal 3; the tally information receiving means for receiving the tally information (password information 102) from the server 110; and the replacing means for replacing the currently stored password information 102 in the portable memory 11 with the newly generated password information 102.

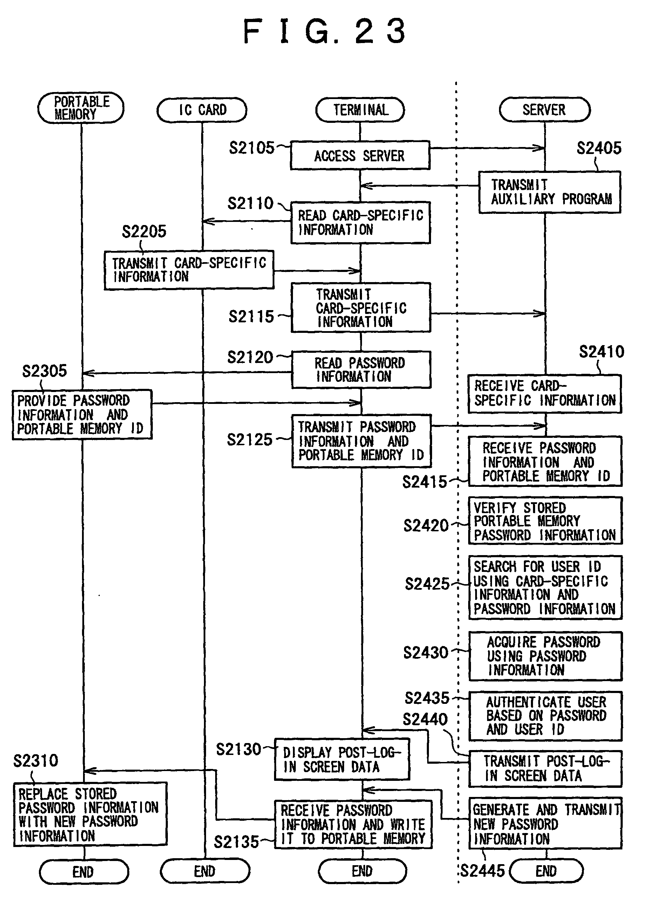

Fig. 23 is a flowchart of steps in which the user logs in to the service site 17a (Fig. 21) from the terminal 3 of the automatic log-in system 100.

The steps to be described below are carried out by the CPU of the terminal 3 and that of the server 110 in keeping with relevant programs.

The user at the terminal 3 first gains access to the server 110 illustratively by inputting the URL of the service site 17a through the browser (step 2105).

In turn, the terminal access unit 131 sends to the terminal 3 an auxiliary program for causing the terminal 3 to implement an automatic log-in capability (step 2405).

Illustratively, the auxiliary program causes the terminal 3 to carry out the following functions: when the user accesses the service site 17a from the terminal 3, the terminal 3 is made to read the card-specific information 101 from the IC card 10, read the password information 102 and portable memory ID 103 from the portable memory 11, transmit the card-specific information 101, password information 102 and portable memory ID 103 thus read to the server 110, or receive the password 102 issued by and sent from the server 110 so as to substitute the received password for the currently stored password information 102 in the portable memory 11.

If the auxiliary program is found already installed in the terminal 3, as when the server 110 is to be accessed for a second time or on a later pass, the server 110 will not transmit the auxiliary program in step 2405.

The terminal receives the auxiliary program and installs it. In accordance with the installed auxiliary program, the terminal 3 activates the reader/writer 7 to access the IC card 10 (step 2110).

The IC card 10 communicates with the reader/writer 7 in noncontact fashion, thereby transmitting the card-specific information 101 to the terminal 3 (step 2205).

The terminal 3 acquires the card-specific information 101 through the reader/writer 7, and sends the acquired information to the server 110 (step 2115).

In the server 110, the terminal access unit 131 receives the card-specific information 101 (step 2410).

The terminal 3 then activates the portable memory drive 8 to read the password information 102 and portable memory ID 103 from the portable memory 11 (step 2120).

The portable memory 11 offers the password information 102 and portable memory ID 103 stored therein to the terminal 3 via the portable memory drive 8 (step 2305).

The terminal 3 sends to the server 110 the password information 102 and portable memory ID 103 acquired from the portable memory 11 (step 2125).

In the server 110, the terminal access unit 131 receives the password information 102 and portable memory ID 103 (step 2415).

Alternatively, the terminal 3 may read the card-specific information 101, password information 102 and portable memory ID 103 and temporarily transmit the retrieved information and ID to the server 110.

As another alternative, the terminal 3 may first transmit the password information 102 and portable memory ID 103 to the server 110, then send the card-specific information 101 to the server 110.

The password information verification unit 132 (Figs. 22A and 22B) receives the password information 102 and portable memory ID 103 from the terminal access unit 131. Given the two items of information, the password information verification unit 132 searches the authentication information database 120 for the corresponding combination of the received information.

If the authentication information database 120 is found to have the same password information 102 and portable memory ID 103 registered in combination, the authentication information search unit 133 verifies that the portable memory 11 utilized by the user is duly registered in the authentication information database 120 and that the password information 102 set in the registered portable memory 11 coincides with the password information 102 sent from the terminal 3 (step 2420).

This step ascertains that the information transmitted by the terminal 3 is the password information 102 derived from the registered portable memory 11.

It is also possible to verify that the IC card 10 and the combination of the IC card 10 and portable memory 11 are duly registered, by resorting to the following arrangements:

Whether or not the IC card 10 is registered may be checked illustratively by searching the authentication information database 120 for the card-specific information 101. The presence of the information 101 in the database 120 attests to the rightful registration of the IC card 10. Alternatively, with card information about the IC card 10 retained in the authentication information database 120, a check may be carried out to see if the transmitted card-specific information 101 coincides with the stored card information.

As another alternative, if the IC card 10 is not found to be registered, the use of the card 10 may be suspended for a predetermined period of time.

The authentication information search unit 133 then receives the card-specific information 101 and password information 102 from the terminal access unit 131. Using the combination of the received information, the authentication information search unit 133 searches the authentication information database 120 for the user ID 106 (step 2425).

Although a search can be made for the user ID 106 using the card-specific information 101 alone, resorting to the combination of the card-specific information 101 and password information 102 for search makes it possible to ascertain that the user is utilizing the duly registered IC card 10 and portable memory 11.

The authentication information search unit 133 then searches the authentication information database 120 for the password 105 using the password information 102 (step 2430).

The authentication unit 134 receives the retrieved user ID 106 and password 105 from the authentication information search unit 133 in order to carry out the user authentication process (step 2435).

If the user is successfully authenticated, the server 110 transmits post-log-in screen data (i.e., data constituting the screen to be displayed by the browser on the terminal 3 after log-in) to the terminal 3 (step 2440).

When the terminal 3 receives the post-log-in screen data, the browser displays the post-log-in screen accordingly (step 2130).

If the user is not authenticated, the server 110 sends error message screen data to the terminal 3.

The password information generation unit 135 then generates new password information 102, and substitutes the new information 102 for the currently stored password information 102 in the authentication information database 120. Furthermore, the password information generation unit 135 sends the newly generated password information 102 to the terminal 3 via the terminal access unit 131 (step 2445).

The terminal 3 receives the password information 102 from the server 110, and activates the portable memory drive 8 to write the received information 102 to the portable memory 11 (step 2135).

This causes the new password information 102 to replace the currently stored password information 102 in the portable memory 11 (step 2310).

If the replacement of the current password information 102 with the new information 102 fails, the terminal 2 may be arranged to detect the failure and notify both the server 110 and the user thereof.

Although the second embodiment above was shown having the password information 102 generated anew for each authentication process and discarded once it is used, this is not limitative of the invention. Alternatively, the same password information 102 may be used in every authentication process. In that case, such information processing steps as the generation and update of the password information 102 become unnecessary.

The second embodiment above was shown having the password information 102 stored in the portable memory 11 so that the user authentication process would be performed using the password 105 associated with the password information 102. Alternatively, the password 105 may be stored in the portable memory 11, so that the password 105 may be retrieved as needed from the memory for user authentication.

As another alternative, step 2445 and the subsequent steps above may be offered as optional steps. In that case, the steps may be carried out selectively by the user or by the business operator running the server 110.

If the password information 102 is found mismatched during the above-described authentication process, the password information 102 may preferably be removed physically from the authentication information database 120 so as to let new password information 102 be generated again.

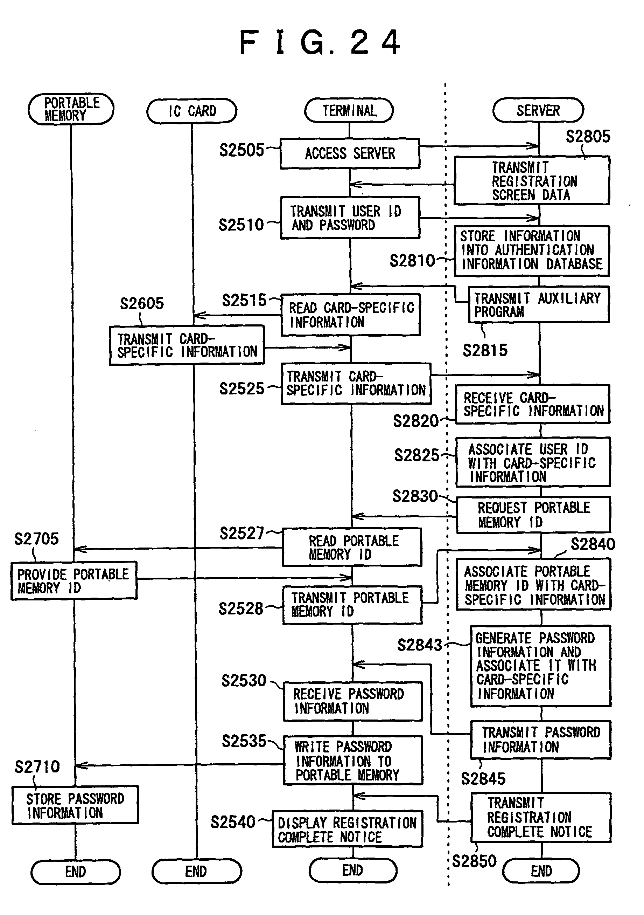

How the user is registered for the service site 17a will now be described with reference to the flowchart of Fig. 24.

Fig. 24 is a flowchart of steps in which the user at the terminal 3 registers for the service site 17a while the registration unit 13a of the server is active in the automatic log-in system 100.

The steps to be described below are carried out by the CPU of the terminal 3 and that of the server 110 in keeping with relevant programs.

The user at the terminal 3 first gains access to the server 110 (step 2505).

When a top page or the like is sent from the server 110, the user clicks on a new registration button on the displayed page to transmit information notifying the server 110 of the user' s willingness to register anew.

In the server 110, the registration unit 13a transmits registration screen data to the terminal 3 (step 2805).

When the terminal 3 receives the registration screen data, the browser displays accordingly a registration screen including input fields ready for user entries. The user inputs a password 105, a user ID 106, and personal information into the displayed registration screen for transmission to the server 110 (step 2510).

If the user already has the user ID 106, that ID is input through the registration screen. Where the user has yet to acquire a user ID 106, either the user may acquire the user ID 106 by completing the registration, or the server 110 may automatically set the user ID 106 for the newly registering user.

The registration unit 13a updates the authentication information database 120 using the information received from the terminal 3 (i.e., password 105, user ID 106 and other information). This allows the newly input user information to be registered (step 2810).

The terminal access unit 41 in the registration unit 13a then transmits an auxiliary program to the terminal 3 (step 2815). At the time of user registration, the auxiliary program allows the terminal 3 to read the card-specific information 101 from the IC card 10 and send the retrieved information 101 to the server 110, to read the portable memory ID 103 from the portable memory 11 and send the retrieved ID 103 to the server 110, or to write to the portable memory 11 the password information 102 issued by the server 110.

This step is skipped if the auxiliary program is already installed in the terminal 3 or if the browser has a built-in auxiliary program.

The terminal 3 installs the auxiliary program received from the server 110. In keeping with the auxiliary program, the terminal 3 drives the reader/writer 7 to start reading the card-specific information 101 from the IC card 10 (step 2515).

The IC card 10 set in the reader/writer 7 sends the card-specific information 101 to the terminal 3 in noncontact fashion (step 2605).

In turn, the terminal 3 transmits the card-specific information 101 read from the IC card 10 to the server 110 (step 2525).

In the server 110, the registration unit 13a receives the card-specific information 101 (step 2820).

The registration unit 13a stores the received card-specific information 101 into the authentication information database 120 (step 2825) by associating the information 101 with the user ID 106 that was stored into the authentication information database 120 in step 2825.

The registration unit 13a requests the terminal 3 to transmit the portable memory ID 103 (step 2830).

Given the request, the terminal 3 activates the portable memory drive 8 to read the portable memory ID 103 from the portable memory 11 (step 2527).

The portable memory 11 yields the portable memory ID 103 to the terminal 3 (step 2705).

In turn, the terminal 3 sends the portable memory ID 103 to the server 110 (step 2528).

In the server 110, the registration unit 13a receives the portable memory ID 103. The registration unit 13a stores the received portable memory ID 103 into the authentication information database 120 (step 2840) by associating the ID 103 with the card-specific information 101 that was stored in step 2825.

The registration unit 13a then generates password information 102, and stores the generated password information 102 into the authentication information database 120 (step 2843) by associating the information 102 with the card-specific information 101 that was stored in step 2825.

After associating the password 105 stored in step 2810 with the password information 102, the registration unit 13a transmits the password information 102 to the terminal 3 (step 2845).

The terminal 3 receives the password information 102 from the server 110 (step 2530).

The terminal 3 then activates the portable memory drive 8 to write the received password information 102 to the portable memory 11 (step 2535).

The portable memory 11 retains the password information 102 (step 2710).

Thereafter, the registration unit 13a sends a registration complete notice to the terminal 3 (step 2850).

On receiving the notice, the terminal 3 causes the browser to give a registration complete notice display (step 2540).

The steps above, when executed, cause the card-specific information 101, password information 102, portable memory ID 103, password 105, and user ID 106 about each new user to be associated with one another as shown in Fig. 22B. The steps further allow the password information 102 to be stored into the user' s portable memory 11.

As described, the registration unit 13a constitutes the authentication information registering means of the invention for registering authentication information based on the first identification information (card-specific information 101) and tally information (password information 102).

The portable memory 11 can accommodate a plurality of pieces of password information 102. With the multiple pieces of password information in use, the IC card 10 and portable memory 11 may be utilized in diverse ways.

For example, a single user may possess a plurality of IC cards 10. In another example, a plurality of users may share a single portable memory 11.

Some of these examples will be explained below.

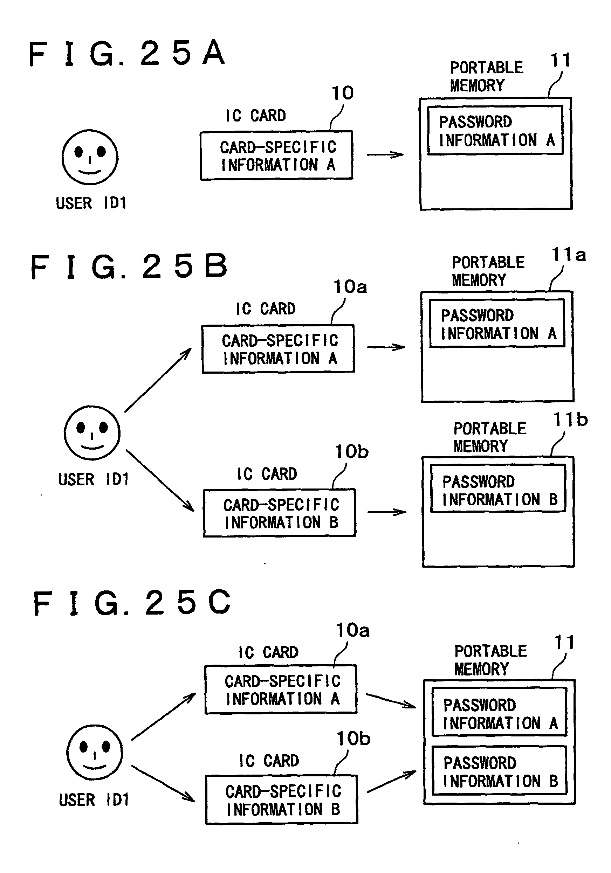

Figs. 25A, 25B and 25C are schematic views depicting how a single user typically utilizes one or multiple IC cards 10 and portable memories 11.

Fig. 25A shows a case where the user makes use of one IC card 10 and one portable memory 11. The portable memory 11 retains password information A associated with card-specific information A in the IC card 10.

In the server 110, the password information A and the user's user ID 1 are associated with the card-specific information A.

In this case, the user is allowed to log in to the service site 17a by getting authenticated using the IC card 10 and portable memory 11.

Fig. 25B shows a case where the user has an IC cards 10a and a portable memory 11a in pairs and an IC card 10b and a portable memory 11b in pairs.

The portable memory 11a contains the password information A associated with the card-specific information A in the IC card 10a. The portable memory 11b retains password information B associated with card-specific information B in the IC card 10b.

In the server 110, the password information A and user ID 1 are associated with the card-specific information A. The password information B and user ID 1 are associated with the card-specific information B.

The user may be authenticated using either the combination of the IC card 10a and portable memory 11a or the combination of the IC card 10b and portable memory 11b.

The user cannot be authenticated by utilizing the combination of the IC card 10a and portable memory 11b, or by resorting to the combination of the IC card 10b and portable memory 11a.

As described, if two IC cards 10 and two portable memories 11 are provided in pairs, each of the pairs may be used for the user authentication of a different service.

For example, the combination of the IC card 10a and portable memory 11a may be registered for the user authentication of a banking service site, and the combination of the IC card 10b and portable memory 11b may be registered for the user authentication of a mail-order site.

Fig. 25C shows a case where the user has two IC cards 10a and 10b and one portable memory 11.

The portable memory 11 contains two kinds of password information: password information A associated with the card-specific information A in the IC card 10a, and password information B associated with the card-specific information B in the IC card 10b.

In the server 110, the password information A and user ID 1 are associated with the card-specific information A. The password information B and user ID 1 are associated with the card-specific information B.

The user may be authenticated using either the combination of the IC card 10a and portable memory 11, or the combination of the IC card 10b and portable memory 11.

Where two IC cards 10 are utilized as described, each card may be registered for the user authentication of a different service.

For example, the combination of the IC card 10a and portable memory 11 may be registered for the user authentication of the banking service site, and the combination of the IC card 10b and portable memory 11 may be registered for the user authentication of the mail-order site.

In this case, the user need only possess one portable memory, which is easier to manage than two.

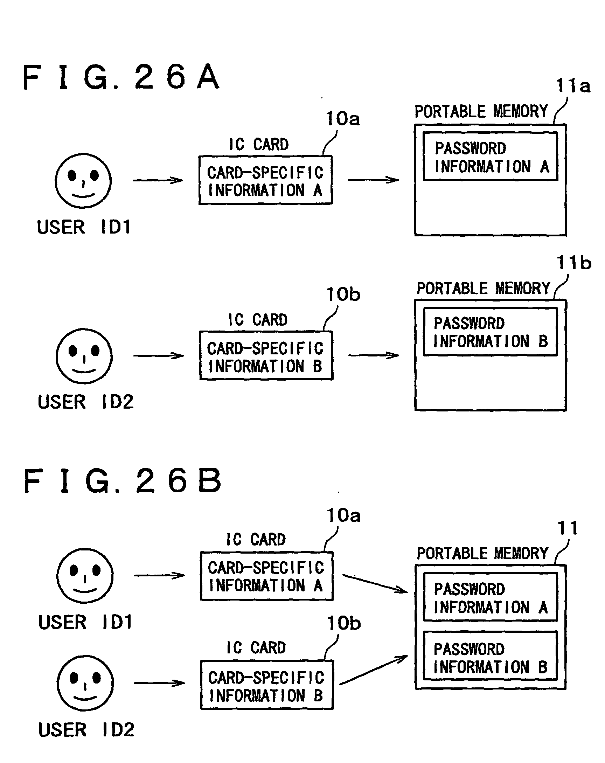

Figs. 26A and 26B are schematic view illustrating how two users typically use IC cards and portable memories.

Such card and memory uses apply illustratively to members of a family registering as users.

Fig. 26A shows a case where two users possess a different combination of an IC card and a portable memory each.

The user having the user ID 1 possesses the IC card 10a and portable memory 11a. The card-specific information A in the IC card 10a is associated with the password information A in the portable memory 11a.

The user having a user ID 2 is in possession of the IC card 10b and portable memory 11b. The card-specific information B in the IC card 10b is associated with the password information B in the portable memory 11b.

In the server 110, the password information A and user ID 1 are associated with the card-specific information A. The password information B and user ID 2 are associated with the card-specific information B.

Fig. 26B shows a case where two users share one portable memory.

The user having the user ID 1 possesses the IC card 10a, and the user having the user ID 2 carries the IC card 10b. The two users share the portable memory 11 that contains two kinds of information: password information A associated with the card-specific information A in the IC card 10a, and password information B associated with the card-specific information B in the IC card 10b.

In the server 110, the password information A and user ID 1 are associated with the card-specific information A. The password information B and user ID 2 are associated with the card-specific information B.

The user who sets the IC card 10a and the portable memory 11 in the terminal 3 can be authenticated using the user ID 1. The user setting the IC card 10b and the portable memory 11 in the terminal 3 is allowed to be authenticated using the user ID 2.

In a typical setup where the portable memory is shared as outlined above, the father may possess the IC card 10a and the daughter may carry the IC card 10b, and the two may share the portable memory 11. In this case, the father is assigned the user ID 1 and the daughter is given the user ID 2.

The father and daughter may then register for different services. Illustratively, the father may register as a user for the banking service site using the IC card 10a and portable memory 11. The daughter may register as a user for the mail-order site using the IC card 10b and portable memory 11.

Upon receipt of a user authentication request from a user utilizing the IC card 10a and portable memory 11, the server 110 recognizes the user as the father based on the associated user ID 1. The server 110 then allows the father to log in to the corresponding service site. Likewise, given a user authentication request from a user utilizing the IC card 10b and portable memory 11, the server 110 recognizes the daughter and allows her to log in to the applicable service site.

Where there are three or more users, the portable memory may be shared in like manner.

Illustratively, each of the users may carry a different IC card, and the portable memory may be arranged to contain a plurality of pieces of password information each associated with the card-specific information held in each of the cards involved.

With the first embodiment discussed earlier, a plurality of users may also share one portable memory.

In such a case, each user' s user tally is stored in the portable memory. The users carry an individual IC card each. The card-specific information in each IC card is associated with the corresponding user's server tally in the server 5. This arrangement allows each user to request the server 5 for user authentication using user' s own IC card and the shared portable memory.

To sum up, the automatic log-in system described above as the second embodiment of this invention provides the following effects:
(1) Since the information needed for user authentication is stored in the IC card 10 and portable memory 11, the user must carry these two storage media in order to request user authentication. If one of the media is fraudulently obtained by a third party, the third party is unable to request user authentication using the medium in question. This provides an appreciable measure of security.
(2) The two storage media are made up of two different types of media, i.e., IC card 10 and portable memory 11. That means it is difficult to copy information from both storage media for possible abuse. This discourages unlawful access by illicit copying of information from the media.
(3) Where the password information 102 is used for user authentication, the password 105 itself is managed by the server 110. This promises a high level of security. Since the password information makes up a one-time password that is discarded once it is used in a user authentication process, an added measure of security is provided.
(4) When a plurality of pieces of password information 102 are stored in a single portable memory 11, the portable memory 11 may be utilized in a flexible manner. Illustratively, the portable memory 11 may be shared by a plurality of users for their authentication. The portable memory 11 may also be used to log in to a plurality of service sites.
(5) The user can request user authentication by simply setting the IC card 10 and portable memory 11 in the terminal 3. There is no need for the user to input authentication information manually, which reduces authentication-related chores to be taken care of by the user.

The second embodiment of this invention may also be implemented using the following constitutions:

In implementing the second embodiment, there may be provided an authenticating method for use with a first storage medium (IC card 10) and a second storage medium (portable memory 11), the authentication method comprising the steps of: transmitting first identification information (card-specific information 101) for identifying the first storage medium; and transmitting second identification information (portable memory ID 103) for identifying the second storage medium and tally information (password information 102) stored in the second storage medium and associated with the first identification information; whereby, if the tally information is found to be derived from the legitimate storage medium, then a user authentication process is performed based on the first identification information and the tally information (first constitution).

With the first constitution, the first identification information may preferably be associated with the user's authentication information (at least one of the password 105 and user ID 106)(second constitution).

The tally information may be associated with the user' s authentication information (third constitution).

With the third constitution, the tally information may be generated on the basis of the user's authentication information (fourth constitution).

With the first constitution, the tally information may be generated in a manner getting renewed following each authentication process (fifth constitution).

With the first constitution, the first and the second storage media may each be an IC card or a portable storage medium.

There may also be provided an authenticating method for use with the terminal 3, a first storage medium and a second storage medium, the authenticating method comprising the steps of: causing the terminal 3 to transmit first identification information for identifying the first storage medium; and causing the terminal 3 to transmit second identification information for identifying the second storage medium and tally information stored in the second storage medium and associated with the first identification information; whereby, if the tally information is found to be derived from the legitimate storage medium, then a user authentication process is performed based on the first identification information and the tally information.

Although the second embodiment above was shown having the card-specific information 101 and the password information 102 stored in the IC card 10 and the portable memory 11 respectively, this is not limitative of the invention. Alternatively, the password information 102 may be stored in the IC card 10, and the portable memory ID 103 of the portable memory 11 may be associated with the user ID 106.

The second embodiment above was shown utilizing two different storage media, i.e., IC card 10 and portable memory 11. Alternatively, two IC cards 10 or two portable memories 11 may be used in requesting user authentication. In this case, the ID information held in one storage medium and the password information 102 stored in the other storage medium may be used to make the user authentication request.

Although the first and the second embodiments above were shown allowing users to be authenticated, this does not mean that the object of authentication is limited to the users only. Alternatively, the identification numbers of apparatuses may be subjected to authentication. For example, consumer electronic (CE) appliances offering their users access to services through a network have come into general use today. A user of each of these appliances may request authentication of the apparatus using two storage media. In this case, the CE appliance in question may comprise the reader/writer 7 and portable memory drive 8.

## Claims

1. An authentication system comprising a terminal and an authentication server, said terminal acquiring first identification information from a first storage medium and tally information from a second storage medium, said first identification information identifying said first storage medium, said authentication server receiving said first identification information and said tally information from said terminal in order to perform an authentication process;
wherein, having acquired said first identification information from said first storage medium and said tally information from said second storage medium, said terminal transmits the acquired first identification information and tally information to said authentication server; and
wherein, having received said first identification information and said tally information from said terminal, said authentication server performs said authentication process using the received first identification information and tally information.

2. An authentication server connected to a terminal which acquires first identification information from a first storage medium and tally information from a second storage medium, said first identification information identifying said first storage medium, said authentication server receiving said first identification information and said tally information from said terminal in order to perform an authentication process, said authentication server comprising:
medium information receiving means for receiving said first identification information and said tally information from said terminal; and
authenticating means for carrying out said authentication process using said first identification information and said tally information received.

3. The authentication server according to claim 2, wherein said second storage medium stores second identification information for identifying said second storage medium;
wherein said authentication server further comprises second identification information receiving means for receiving said second identification information acquired by said terminal from said second storage medium; and
wherein said authenticating means performs said authentication process if a combination of said second identification information and said tally information received matches a combination of previously stored second identification information and tally information.

4. The authentication server according to claim 2, wherein said authenticating means performs said authentication process if said first identification information received matches previously stored first identification information.

5. The authentication server according to claim 2, wherein said authenticating means performs said authentication process if a combination of said first identification information and said tally information received matches a combination of previously stored first identification information and tally information.

6. The authentication server according to claim 2, further comprising searching means which searches for first authentication information based on said first identification information received and for second authentication information based on said tally information received;
wherein said authenticating means performs said authentication process using said first authentication information and said second authentication information retrieved by said searching means.

7. The authentication server according to claim 6 further comprising:
tally information transmitting means for generating tally information and transmitting the generated tally information to said terminal; and
storing means for storing said generated tally information into a storage unit in association with said second identification information;
wherein said searching means searches for the stored tally information.

8. The authentication server according to claim 7, wherein said tally information transmitting means generates new tally information after said authenticating means has used said tally information received from said terminal in carrying out said authentication process.

9. The authentication server according to claim 2, wherein at least one of said first and said second storage media is a portable memory constituted by either an IC card or a semiconductor memory.

10. The authentication server according to claim 2, further comprising authentication information storing means for receiving new first identification information and tally information from said terminal so as to store authentication information based on said first identification information and said tally information received;
wherein said authenticating means performs said authentication process using the stored authentication information.

11. An authenticating method for use with an authentication server connected to a terminal which acquires first identification information from a first storage medium and tally information from a second storage medium, said first identification information identifying said first storage medium, said authenticating method allowing said authentication server to receive said first identification information and said tally information from said terminal in order to perform an authentication process, said authentication server comprising medium information receiving means and authenticating means, said authenticating method comprising the steps of:
(a) causing said medium information receiving means to receive said first identification information and said tally information from said terminal; and
(b) causing said authenticating means to carry out said authentication process using said first identification information and said tally information received.

12. The authenticating method according to claim 11, wherein said second storage medium stores second identification information for identifying said second storage medium; and
wherein said authentication server comprises second identification information receiving means;
said authenticating method further comprising the steps of:
(c) causing said second identification information receiving means to receive from said terminal said second identification information acquired by said terminal from said second storage medium; and
(d) executing step (b) to perform said authentication process if a combination of said second identification information and said tally information received matches a combination of previously stored second identification information and tally information.

13. The authenticating method according to claim 11, further comprising the step of executing step (b) to perform said authentication process if said first identification information received matches previously stored first identification information.

14. The authenticating method according to claim 11, further comprising the step of executing step (b) to perform said authentication process if a combination of said first identification information and said tally information received matches a combination of previously stored first identification information and tally information.

15. The authenticating method according to claim 11, wherein said authentication server further comprises searching means, said authenticating method further comprising the steps of:
(e) causing said searching means to search for first authentication information using said first identification information received and to search for second authentication information using said tally information received; and
(f) executing step (b) to perform said authentication process using said first and said second authentication information retrieved in step (e).

16. The authenticating method according to claim 15, wherein said authentication server further comprises tally information transmitting means and storing means, said authenticating method further comprising the steps of:
(g) causing said tally information transmitting means to generate tally information and transmit the generated tally information to said terminal;
(h) causing said storing means to store said generated tally information into a storage unit in association with said second identification information; and
(i) executing step (e) to search for the stored tally information.

17. The authenticating method according to claim 16, further comprising the step of causing said tally information transmitting means to generate new tally information after said authenticating means has used said tally information received from said terminal in carrying out said authentication process.

18. The authenticating method according to claim 11, wherein at least one of said first and said second storage media is a portable memory constituted by either an IC card or a semiconductor memory.

19. The authenticating method according to claim 11, wherein said authentication server further comprises authentication information storing means, said authenticating method further comprising the steps of:
(j) causing said authentication information storing means to receive new first identification information and tally information from said terminal so as to store authentication information based on said first identification information and said tally information received; and
(k) executing step (b) to perform said authentication process using the stored authentication information.

20. An authenticating program for use with a computer connected to a terminal which acquires first identification information from a first storage medium and tally information from a second storage medium, said first identification information identifying said first storage medium, said authenticating program allowing said computer to receive said first identification information and said tally information from said terminal in order to perform an authentication process, said authenticating program causing said computer to implement functions comprising:
a medium information receiving function of receiving said first identification information and said tally information from said terminal; and
an authenticating function of carrying out said authentication process using said first identification information and said tally information received.

21. The authenticating program according to claim 20, wherein said second storage medium stores second identification information for identifying said second storage medium, said authenticating program further causing said computer to implement a second identification information receiving function of receiving from said terminal said second identification information acquired by said terminal from said second storage medium;
wherein said authenticating function is executed so as to perform said authentication process if a combination of said second identification information and said tally information received matches a combination.of previously stored second identification information and tally information.

22. The authenticating program according to claim 20, wherein said authenticating function is executed so as to perform said authentication process if said first identification information received matches previously stored first identification information.

23. The authenticating program according to claim 20, wherein said authenticating function is executed so as to perform said authentication process if a combination of said first identification information and said tally information received matches a combination of previously stored first identification information and tally information.

24. The authenticating program according to claim 20, further causing said computer to implement a searching function of searching for first authentication information using said first identification information received and of searching for second authentication information using said tally information received;
wherein said authenticating function is executed so as to perform said authentication process using said first and said second authentication information retrieved by said searching function.

25. The authenticating program according to claim 24, further causing said computer to implement:
a tally information transmitting function of generating tally information and transmitting the generated tally information to said terminal; and
a storing function of storing said generated tally information into a storage unit in association with said second identification information;
wherein said searching function is executed so as to search for the stored tally information.

26. The authenticating program according to claim 25, wherein said tally information transmitting function is executed so as to generate new tally information after said authenticating function has used said tally information received from said terminal in carrying out said authentication process.

27. The authenticating program according to claim 20, wherein at least one of said first and said second storage media is a portable memory constituted by either an IC card or a semiconductor memory.

28. The authenticating program according to claim 20, further causing said computer to implement an authentication information storing function of receiving new first identification information and tally information from said terminal so as to store authentication information based on said first identification information and said tally information received;
wherein said authenticating function is executed so as to perform said authentication process using the stored authentication information.

29. A storage medium which stores an authenticating program in a manner readable by a computer connected to a terminal which acquires first identification information from a first storage medium and tally information from a second storage medium, said first identification information identifying said first storage medium, said authenticating program allowing said computer to receive said first identification information and said tally information from said terminal in order to perform an authentication process, said authenticating program causing said computer to implement functions comprising:
a medium information receiving function of receiving said first identification information and said tally information from said terminal; and
an authenticating function of carrying out said authentication process using said first identification information and said tally information received.

30. The storage medium according to claim 29, wherein said second storage medium stores second identification information for identifying said second storage medium, said authenticating program further causing said computer to implement a second identification information receiving function of receiving from said terminal said second identification information acquired by said terminal from said second storage medium;
wherein said authenticating function is executed so as to perform said authentication process if a combination of said second identification information and said tally information received matches a combination of previously stored second identification information and tally information.

31. The storage medium according to claim 29, wherein said authenticating function is executed so as to perform said authentication process if said first identification information received matches previously stored first identification information.

32. The storage medium according to claim 29, wherein said authenticating function is executed so as to perform said authentication process if a combination of said first identification information and said tally information received matches a combination of previously stored first identification information and tally information.

33. The storage medium according to claim 29, wherein said authenticating program further causes said computer to implement a searching function of searching for first authentication information using said first identification information received and of searching for second authentication information using said tally information received;
wherein said authenticating function is executed so as to perform said authentication process using said first and said second authentication information retrieved by said searching function.

34. The storage medium according to claim 33, wherein said authenticating program further causes said computer to implement:
a tally information transmitting function of generating tally information and transmitting the generated tally information to said terminal; and
a storing function of storing said generated tally information into a storage unit in association with said second identification information;
wherein said searching function is executed so as to search for the stored tally information.

35. The storage medium according to claim 34, wherein said tally information transmitting function is executed so as to generate new tally information after said authenticating function has used said tally information received from said terminal in carrying out said authentication process.

36. The storage medium according to claim 29, wherein at least one of said first and said second storage media is a portable memory constituted by either an IC card or a semiconductor memory.

37. The storage medium according to claim 29, wherein said authenticating program further causes said computer to implement an authentication information storing function of receiving new first identification information and tally information from said terminal so as to store authentication information based on said first identification information and said tally information received;
wherein said authenticating function is executed so as to perform said authentication process using the stored authentication information.

38. A terminal for requesting an authentication server of claim 2 to perform an authentication process, said terminal comprising:
medium information acquiring means for acquiring first identification information from a first storage medium and tally information from a second storage medium, said first identification information identifying said first storage medium, and;
medium information transmitting means for transmitting the acquired first identification information and tally information to said authentication server.

39. A terminal for requesting an authentication server of claim 3 to perform an authentication process, said terminal comprising:
medium information acquiring means for acquiring first identification information from a first storage medium and second identification information and tally information from a second storage medium, said first identification information identifying said first storage medium, said second identification information identifying said second storage medium, and;
medium information transmitting means for transmitting the acquired first identification information, second identification information, and tally information to said authentication server.

40. A terminal for requesting an authentication server of claim 7 to perform an authentication process, said terminal comprising:
medium information acquiring means for acquiring first identification information from a first storage medium and tally information from a second storage medium, said first identification information identifying said first storage medium;
medium information transmitting means for transmitting the acquired first identification information and tally information to said authentication server;
tally information receiving means for receiving tally information from said authentication server; and
replacing means for replacing the tally information stored in said second storage medium with the tally information received by said tally information receiving means.

41. An authentication requesting method for requesting an authentication server of claim 2 to perform an authentication process, said authentication requesting method being for use with a computer comprising medium information acquiring means and medium information transmitting means, said authentication requesting method comprising the steps of:
causing said medium information acquiring means to acquire first identification information from a first storage medium and tally information from a second storage medium, said first identification information identifying said first storage medium; and
causing said medium information transmitting means to transmit the acquired first identification information and tally information to said authentication server.

42. An authentication requesting method for requesting an authentication server of claim 3 to perform an authentication process, said authentication requesting method being for use with a computer comprising medium information acquiring means and medium information transmitting means, said authentication requesting method comprising the steps of:
causing said medium information acquiring means to acquire first identification information from a first storage medium and second identification information and tally information from a second storage medium, said first identification information identifying said first storage medium, said second identification information identifying said second storage medium; and
causing said medium information transmitting means to transmit the acquired first identification information, second identification information and tally information to said authentication server.

43. An authentication requesting method for requesting an authentication server of claim 7 to perform an authentication process, said authentication requesting method being for use with a computer comprising medium information acquiring means, medium information transmitting means, tally information receiving means, and replacing means, said authentication requesting method comprising the steps of:
causing said medium information acquiring means to acquire first identification information from a first storage medium and tally information from a second storage medium, said first identification information identifying said first storage medium;
causing said medium information transmitting means to transmit the acquired first identification information and tally information to said authentication server;
causing said tally information receiving means to receive tally information from said authentication server; and
causing said replacing means to replace the tally information stored in said second storage medium with the tally information received by said tally information receiving means.

44. An authentication requesting program for causing a computer to request an authentication server of claim 2 to perform an authentication process, said authentication requesting program causing said computer to implement functions comprising:
a medium information acquiring function of acquiring first identification information from a first storage medium and tally information from a second storage medium, said first identification information identifying said first storage medium; and
a medium information transmitting function of transmitting the acquired first identification information and tally information to said authentication server.

45. An authentication requesting program for causing a computer to request an authentication server of claim 3 to perform an authentication process, said authentication requesting program causing said computer to implement functions comprising:
a medium information acquiring function of acquiring first identification information from a first storage medium and second identification information and tally information from a second storage medium, said first identification information identifying said first storage medium, said second identification information identifying said second storage medium; and
a medium information transmitting function of transmitting the acquired first identification information, second identification information and tally information to said authentication server.

46. An authentication requesting program for causing a computer to request an authentication server of claim 7 to perform an authentication process, said authentication requesting program causing said computer to implement functions comprising:
a medium information acquiring function of acquiring first identification information from a first storage medium and tally information from a second storage medium, said first identification information identifying said first storage medium;
a medium information transmitting function of transmitting the acquired first identification information and tally information to said authentication server;
a tally information receiving function of receiving tally information from said authentication server; and
a replacing function of replacing the tally information stored in said second storage medium with the tally information received by said tally information receiving means.

47. A storage medium which stores an authentication requesting program in a manner readable by a computer for requesting an authentication server of claim 2 to perform an authentication process, said authentication requesting program causing said computer to implement functions comprising:
a medium information acquiring function of acquiring first identification information from a first storage medium and tally information from a second storage medium, said first identification information identifying said first storage medium; and
a medium information transmitting function of transmitting the acquired first identification information and tally information to said authentication server.

48. A storage medium which stores an authentication requesting program in a manner readable by a computer for requesting an authentication server of claim 3 to perform an authentication process, said authentication requesting program causing said computer to implement functions comprising:
a medium information acquiring function of acquiring first identification information from a first storage medium and second identification information and tally information from a second storage medium, said first identification information identifying said first storage medium, said second identification information identifying said second storage medium; and
a medium information transmitting function of transmitting the acquired first identification information, second identification information and tally information to said authentication server.

49. A storage medium which stores an authentication requesting program in a manner readable by a computer for requesting an authentication server of claim 7 to perform an authentication process, said authentication requesting program causing said computer to implement functions comprising:
a medium information acquiring function of acquiring first identification information from a first storage medium and tally information from a second storage medium, said first identification information identifying said first storage medium;
a medium information transmitting function of transmitting the acquired first identification information and tally information to said authentication server;
a tally information receiving function of receiving tally information from said authentication server; and
a replacing function of replacing the tally information stored in said second storage medium with the tally information received by said tally information receiving means.
